Europäisches Patentamt

European Patent Office

Office européen des brevets

(11) Veröffentlichungsnummer: **0 190 673 B1**

(12) **EUROPÄISCHE PATENTSCHRIFT**

(45) Veröffentlichungstag der Patentschrift: 27.03.91    (51) Int. Cl.⁵: **B23Q  3/157**

(21) Anmeldenummer: 86101248.2

(22) Anmeldetag: 31.01.86

(54) Werkzeugmaschine für die spanabhebende Bearbeitung von Werkstücken mit verschiedenen Werkzeugen.

(30) Priorität: 04.02.85 DE 3503637
              17.09.85 DE 3533048

(43) Veröffentlichungstag der Anmeldung:
     13.08.86 Patentblatt  86/33

(45) Bekanntmachung des Hinweises auf die
     Patenterteilung:
     27.03.91 Patentblatt  91/13

(84) Benannte Vertragsstaaten:
     FR GB IT SE

(56) Entgegenhaltungen:
     EP-A- 0 106 081
     DD-A- 115 600
     DE-A- 1 652 673
     DE-C- 3 339 619
     DE-U- 8 502 937

     PATENT ABSTRACTS OF JAPAN, Band 8, Nr.
     158 (M-311)[1595], 21. Juli 1984; & JP - A - 59
     53138 (ENSHIYUU SEISAKU) 27.03.1984

(73) Patentinhaber: ROYAL Werkzeug-
     Kontrollanlagen GmbH
     Gustav-Rau-Strasse 17
     W-7120 Bietigheim-Bissingen(DE)

(72) Erfinder: **Homann, Norbert**
     **Drosselweg 4**
     **W-7121 Pleidelsheim(DE)**
     Erfinder: **Lindemann, Albert**
     **Am Rechberg 4**
     **W-6101 Brenzbach(DE)**

(74) Vertreter: **Kastner, Hermann, Dipl.-Ing.**
     **Osterholzallee 89**
     **W-7140 Ludwigsburg(DE)**

**Beschreibung**

Die Erfindung betrifft eine Werkzeugmaschine gemäß Oberbegriff des Anspruchs 1. Eine solche Maschine ist aus der EP-A-0 106 081 bekannt.

Bei Werkzeugmaschinen, die für die spanabhebende Bearbeitung von Werkstücken mit verschiedenen Werkzeugen eingesetzt werden, gibt es Werkzeugwechselvorrichtungen mit einem Greifer oder Leder und mit einem Magazin für die zu wechselnden Werkzeughalter, an denen unterschiedliche Werkzeuge befestigt sind. Dabei holt die Werkzeugwechselvorrichtung je einen Werkzeughalter aus dem Magazin und bringt ihn zur Einspannstelle an der Werkzeugmaschine. Die Werkzeugmaschine übernimmt den Werkzeughalter von der Werkzeugwechselvorrichtung durch eine gesonderte Übernahmebewegung, des den Werkzeughalter aufnehmenden Teils der Werkzeugmaschine, d.h. im allgemeinen der Hauptspindel. Danach zieht sich entweder die Werkzeugwechselvorrichtung von der Einspannstelle in eine Wartestellung zurück oder die Hauptspindel der Werkzeugmaschine fährt von der Werkzeugwechselstellung in die Arbeitsstellung zurück. Beim nächsten Werkzeugwechsel fährt entweder das Ladegerät wieder an die Einspannstelle heran und übernimmt den Werkzeughalter von der Hauptspindel, die ihn in einer gesonderten Entladebewegung abgibt oder die Hauptspindel fährt aus der Arbeitsstellung in die Werkzeugwechselstellung und übergibt dort den Werkzeughalter an die Werkzeugwechselvorrichtung. Letztere bringt den Werkzeughalter in das Magazin zurück und holt dort den nächsten Werkzeug halter ab. Bei diesen Werkzeugwechselvorrichtungen ist die Werkzeugwechselzeit verhältnismäßig groß, weil dabei entweder die Wechselvorrichtung oder auch die Hauptspindel oder auch beide Teile Relativbewegungen zueinander ausführen. Außerdem müssen bei diesem System sehr viele aufwendige Bewegungsabläufe hinsichtlich der Bewegungsstrecke und der Genauigkeit der Positionierung ausgeführt werden, weil die Werkzeugwechselvorrichtung von außerhalb der Werkzeugmaschine an diese ausreichend genau herangeführt werden muß oder umgekehrt. Dazu sind außerdem an den Werkzeughaltern Greifernuten oder andere Greifelemente erforderlich, die ein sicheres und genaues Erfassen der Werkzeughalter überhaupt erst ermöglichen. Der steuertechnische Aufwand ist bei diesen Systemen beträchtlich groß.

Daneben gibt es eine Werkzeugwechseleinrichtung, bei der die Werkzeuge von Greifern ständig erfaßt gehalten werden (siehe EP-A-0 106 081). Diese Greifer sitzen an der Koppel eines Parallellenkerpaares. Damit werden sie zwischen einer Übergabestellung und einer Ruhestellung oder Magazinstellung parallel zu sich selbst hin und her geschwenkt. Bei dieser Werkzeugwechselvorrichtung können die Greifer mit dem Werkzeug stets verbunden bleiben. Aufgrund der ausholenden Schwenkbewegung erfordert diese Einrichtung aber einen verhältnismäßig großen Freiraum, der frei von anderen Vorrichtungen gehalten werden muß. Aufgrund der endlichen Länge der Parallellenker im Hinblick auf eine erträgliche Größe des Freiraums für die Schwenkbewegung besteht zwischen dem in der Hauptspindel sitzenden Werkzeughalter und dessen Werkzeug und den in der Magazinstellung stehenden Werkzeughaltern mit deren Werkzeugen nur ein begrenzter Höhenabstand. Bei Werkzeugen, die eine größere Längserstreckung vom vorderen Ende des Werkzeughalters aus haben, ragt dieses Werkzeug sehr weit abwärts in Richtung auf den Werkstücktisch hin vor. Das kann zur Folge haben, daß die Vorschubbewegung zwischen der Hauptspindel und dem Werkzeugtisch auf verhältnismäßig kleine Werte beschränkt werden muß.

Der Erfindung liegt die Aufgabe zugrunde, eine Werkzeugmaschine mit einer Werkzeugwechseleinrichtung zu schaffen, bei der einerseits die Greifer ständig am Werkzeughalter anliegen können und bei der andererseits ein verhältnismäßig geringer Freiraum für die Werkzeugwechselvorgänge erforderlich ist und zugleich ein verhältnismäßig großer Höhenabstand zwischen den in der Bereitschaftsstellung befindlichen und dem in der Hauptspindel eingespannten Werkzeug gegeben ist.

Diese Aufgabe wird durch eine Werkzeugmaschine mit den in Anspruch 1 angegebenen Merkmalen gelöst.

Mittels der Führungsstangen und der zugeordneten Führungen kann je ein Werkzeughalter aus der vom Werkstücktisch weit zurückgezogenen Ruhestellung zunächst in eine Übergabestellung abgesenkt werden, dann mittels der Schwenkvorrichtung um die Längsachse der Führungsstange bis in die Fluchtlinie der Hauptspindel hinübergeschwenkt werden und mittels einer Relativbewegung der Führungsstange gegenüber der Hauptspindel in die Hauptspindel eingesetzt werden, wo er von deren Spannvorrichtung festgespannt wird. Umgekehrt kann der in der Hauptspindel sitzende Werkzeughalter durch eine Relativbewegung zwischen der Führungsstange und der Hauptspindel aus letzterer herausgeführt werden, mittels der Schwenkvorrichtung wieder aus der Fluchtlinie der Hauptspindel herausgeschwenkt werden sowie mittels einer Längsbewegung der Führungsstange wieder in die Ruhestellung zurückgeführt werden. Dabei muß der Werkzeughalter lediglich eine solche Schwenkbewegung ausführen, daß er gerade außerhalb der relativen Bewegungsbahn des Spindelgehäuses steht. Darüber hinausgehende Bewegungen sind nicht erforderlich. Die Führungsstangen und ihre Längsführungen können also sehr eng um die Hauptspindel und um das Spindelgehäuse herum angeordnet sein. Der außerhalb des verhältnismäßig geringen Bewegungsraumes der Werkzeughalter und der Führungseinrichtung gelegene Raum steht für andere Teile der Werkzeugmaschine frei zur Verfügung. Dadurch daß die Haltearme in der aus der relativen Bewegungsbahn der Hauptspindel herausgeschwenkten Stellung lediglich eine Längsbewegung in lotrechter Richtung, d.h. parallel zur Längsachse der Hauptspindel, ausführen, kann diese Längsbewegung beliebig weit ausgeführt werden. Die Werkzeughalter können also in eine gegenüber dem Werkzeugtisch ausreichend weit zurückgezogene oder angehobene Stellung verfahren werden, die bei der bekannten Vorrichtung durch die endliche Länge der Parallellenker beschränkt ist.

Durch eine Ausgestaltung der Werkzeugmaschine nach Anspruch 2 wird eine verhältnismäßig einfache und billig herzustellende Schwenkvorrichtung geschaffen, die lediglich eines geradlinigen Kraftantriebes bedarf, der verhältnismäßig einfach durch hydraulische oder pneumatische Kolbenantriebe verwirklicht werden kann. Durch eine Weiterbildung der Werkzeugmaschine nach Anspruch 3 wird eine sehr kompakte, raumsparende Ausführungsform der Schwenkvorrichtung geschaffen. Bei der Weiterbildung der Werkzeugmaschine nach Anspruch 4 muß der Kraftantrieb nicht zwischen den beiden Teilen der Führungsstange eingeschaltet werden, sondern er kann auf die Betätigung des einen Teils der Führungsstange beschränkt werden, was eine weitere Vereinfachung der Schwenkvorrichtung und eine Erleichterung der Leitungsführung für die Energiezuführung ergibt. Bei einer Ausgestaltung der Werkzeugmaschine nach Anspruch 5 kann ein gesonderter Kraftantrieb für jede einzelne Führungsstange eingespart werden.

Bei einer Ausgestaltung der Werkzeugmaschine nach Anspruch 6 ist der in die Hauptspindel aufgenommene Werkzeughalter vom Haltearm in axialer Richtung abgehoben. Dadurch kann jede Drehlagerung am Haltearm für die Werkzeughalter entfallen, wodurch sowohl der Tragarm wie auch die Werkzeughalter einfacher und billiger gestaltet werden können. Bei einer Weiterbildung der Werkzeugmaschine nach Anspruch 7 kann ein aus der Spindel abgegebener Werkzeughalter vom Tragarm sicher und zuverlässig aufgenommen werden, gewissermaßen aufgefangen werden, wobei die kegelstumpfförmigen Auflageflächen für eine Zentrierung des Werkzeughalters am Tragarm sorgen, ohne daß es dazu einer sehr genauen Einstellung des Tragarmes auf die Fluchtlinie der Hauptspindel bedarf. Die kegelstumpfförmigen Auflageflächen haben den weiteren Vorteil, daß der Werkzeughalter am Tragarm spielfrei gehalten wird und er bei den Beschleunigungen und Verzögerungen anläßlich von Schwenkbewegungen des Tragarmes keine Kippbewegungen am Haltearm ausführt.

Bei einer Ausgestaltung der Werkzeugmaschine nach Anspruch 8 wird durch die Positioniervorrichtung ein Werkzeughalter hinsichtlich seiner Drehstellung am Tragarm stets so ausgerichtet, daß der an ihm vorhandene Teil der Mitnehmervorrichtung stets genau auf den entsprechenden Teil der Mitnehmervorrichtung an der Hauptspindel ausgerichtet ist, sofern diese für den Werkzeugwechsel durch eine entsprechende Steuerung ihres Antriebes stets in der gleichen Drehstellung stillgesetzt wird.

Bei einer Ausgestaltung der Werkzeugmaschine nach Anspruch 9 können die Halteelemente des Tragarms von dem in der Hauptspindel sitzenden Werkzeughalter seitlich weggeschwenkt werden. Die Halteelemente können daher auf einen verhältnismäßig kurzen Längenabschnitt des Werkzeughalters beschränkt werden, wobei sie in einer Schwenkebene in unmittelbarer Nähe der Stirnfläche der Hauptspindel angeordnet werden können. Außerdem benötigen sie bei ihrer Freigabebewegung keinen axialen Bewegungsraum. Bei einer Weiterbildung der Werkzeugmaschine nach Anspruch 10 wird eine Betätigungsvorrichtung geschaffen, die allein durch die Annäherungsbewegung des Tragarms an das Spindelgehäuse betätigt wird. Im Bedarfsfalle kann diese Betätigungsvorrichtung aber auch durch einen relativ zum Spindelgehäuse bewegbar geführten und mit einem Kraftantrieb gekoppelten Anschlag betätigt werden.

Eine Ausgestaltung der Werkzeugmaschine nach Anspruch 11 berücksichtigt den Umstand, daß in Industrie- und Handwerksbetrieben die Druckluftnetze zur Versorgung druckluftbetätigter Geräte oder mit Druckluft angetriebener Maschinen in der Regel auf einen Überdruck gegenüber dem Atmosphärendruck von 6 bar eingestellt sind. Je nach der Kolbenfläche der in der Werkzeugmaschine verwendeten Kolbenantriebe ruft ein solcher Überdruck eine Kolbenkraft hervor, die bei den zu bewegenden Teilen je nach ihrer Masse eine bestimmte Beschleunigung bewirkt. Da die Kolbenantriebe in der Regel aus einer vorgegebenen Typenreihe nach bestimmten konstruktiven Gesichtspunkten ausgewählt werden, ergäbe sich durch den normalen Netzdruck eine so große Kolbenkraft, daß der untere Stangenteil mit dem Haltearm und dem Werkzeughalter nach dem Auftreffen am ersten Anschlag eine so große Drehbeschleunigung erführe, daß der Haltearm mit einer sehr großen Endgeschwindigkeit seine Endstellung in der Fluchtlinie der Längsachse der Hauptspindel erreichen würde. Diese Schwenkgeschwindigkeit müßte dann schlagartig auf Null abgebremst werden, was hohe Beschleunigungskräfte mit entsprechend starken Beanspruchungen der miteinander zusammenwirkenden Teile hervorrufen würde. Durch die Ausgestaltung der Werkzeugmaschine nach Anspruch 11 wird dann, wenn für einen der Kolbenantriebe das Steuerventil in seine Arbeitsstellung umgeschaltet wird, die mit dem Kolbenantrieb gekoppelte Führungsstange wie sonst auch abgesenkt, bis der Stangenteil mit dem Haltearm auf den ersten Anschlag auftrifft und er von da an diese Höhenstellung beibehält. Bei der weiteren Abwärtsbewegung des zweiten Stangenteils wird nicht nur infolge der Relativbewegung zwischen dem Nachführglied und der Steuerkurve der erste Stangenteil mit dem Haltearm einwärts verschwenkt, sondern auch das Federelement zwischen den beiden Stangenteilen zusammengedrückt. Dadurch, daß der Druckwert der Druckluft in der Versorgungsleitung unter Berücksichtigung der konstruktiven und physikalischen Gegenheiten der Kolbenantriebe und der Führungsstangen vor allem auf die anwachsende Gegenkraft dieses Federelementes abgestimmt ist, wird die Antriebskraft des Kolbenantriebes zunehmend von dem Federelement aufgefangen und dadurch sowohl die Relativbewegung der beiden Stangenteile wie auch die Schwenkbewegung des Haltearmes zunehmend verzögert. Dadurch erreicht der Schwenkarm mit verhältnismäßig geringer Endgeschwindigkeit seine Endstellung in der Fluchtlinie der Hauptspindel, wobei die verbliebenen Beschleunigungskräfte von der Schwenkvorrichtung ohne weiteres aufgenommen werden können. Der Druckwert in der Versorgungsleitung wird dabei zweckmäßigerweise so eingestellt, daß in der Endstellung des Schwenkarmes noch ein kleiner Schwenkkraftüberschuß vorhanden ist, so daß auch bei unterschiedlichen Reibungswerten in den verschiedenen Führungen die Endstellung des Schwenkarmes mit Sicherheit erreicht wird.

Wenn bei einem Werkzeugwechsel der zuletzt in der Hauptspindel sitzende Werkzeughalter aus dieser in axialer Richtung herausgefahren worden ist und aus deren Fluchtlinie herausgeschwenkt werden soll und anschließend zusammen mit der Führungsstange in die Ruhestellung angehoben werden soll, dann wird eine kurze Zeitspanne vor dem Umschalten des Steuerventils des betreffenden Kolbenantriebes durch das in die gemeinsame Versorgungsleitung aller Kolbenantriebe eingeschaltete Entlüftungsventil die gemeinsame Versorgungsleitung vorübergehend entlüftet. Dadurch sinkt der Überdruck sowohl in der gemeinsamen Versorgungsleitung wie auch in den Zylindern der daran angeschlossenen Kolbenantriebe ab. Wenn dann das Steuerventil des Kolbenantriebes mit der abgesenkten Führungsstange aus der Arbeitsstellung in die Ruhestellung umschaltet, wird bei diesem Kolbenantrieb die oben gelegene Kolbenseite ins Freie entlüftet und die unten gelegene Kolben

seite an die Versorgungsleitung angeschlossen. Da darin der Überdruck stetig weiter absinkt, wird der Kolben dieses Kolbenantriebes zwar angehoben, aber mit einer verringerten Druckkraft, die während des Anhebens sogar noch abnimmt. Infolge der gleichzeitig stattfindenden Relativbewegung zwischen dem Nachführglied und der Steuerkurve wird der Haltearm aus der Fluchtlinie der Hauptspindel herausgeschwenkt. Diese Schwenkbewegung erfolgt mit abnehmender Beschleunigung, so daß die Schwenkvorrichtung nur eine verhältnismäßig geringe Endgeschwindigkeit auffangen muß. Wenn nach Ablauf der am Zeitschaltglied eingestellten Zeitspanne das Entlüftungsventil in der gemeinsamen Versorgungsleitung wieder geschlossen wird und diese Versorgungsleitung wieder mit der Druckquelle verbunden wird, muß zunächst der gesammte Rauminhalt der Versorgungsleitung einschließlich der Zylinder sämtlicher Kolbenantriebe erst einmal aufgefüllt werden, ehe der Druck in diesen Räumen wieder seinen Ausgangswert erreichen kann. Da mit Ausnahme eines zweiten Kraftantriebes, der in der Zwischenzeit von der Programmsteuerung der Werkzeugmaschine in die abgesenkte Stellung gesteuert wurde, die übrigen Kolbenantriebe in ihrer angehobenen Ruhestellung stehen, ist das Auffüllvolumen verhältnismäßig groß. Die Versorgungsleitung und die Zylinder der in der Ruhestellung befindlichen Kolbenantriebe wirken somit als Puffervolumen für die einströmende Druckluft. Auch dadurch wird der noch anzuhebende Kolbenantrieb nicht sofort voll beschleunigt. Auch wenn das Entlüftungsventil schon umgeschaltet ist und es die Entlüftung der Versorgungsleitung beendet hat und diese bereits wieder mit der Druckquelle verbunden ist, noch ehe der Haltearm seine außenliegende Schwenkstellung ganz erreicht hat, wird die durch die Pufferwirkung nur allmählich einsetzende Druckkraft an seinem Kolbenantrieb die Endgeschwindigkeit des Haltearmes nur wenig erhöhen. Dadurch bleiben die aufzufangenden Kräfte auch in diesem Falle noch verhältnismäßig gering. Dadurch werden sowohl beim Einschwenken wie auch beim Ausschwenken der Haltearme mit den Werkzeughaltern nur solche Beschleunigungskräfte hervorgerufen, die von der Schwenkvorrichtung ohne Überlastung ihrer Teile aufgenommen werden können.

Bei einer Ausgestaltung der Werkzeugmaschine nach Anspruch 12 läßt sich der Druckwert in der gemeinsamen Versorgungsleitung aller Kolbenantriebe entsprechend deren Gegebenheiten optimal einstellen. Außerdem werden dadurch die Kolbenantriebe der Wechselvorrichtungen von Schwankungen des Überdruckes im Druckluft-Versorgungsnetz unabhängig. Bei einer Ausgestaltung der Werkzeugmaschine nach Anspruch 13 läßt sich die Werkzeugmaschine auch in bezug auf die Aus

schwenkbewegung der Haltearme optimal einstellen und somit an Änderungen etwa der Masse der Werkzeughalter oder der daran angebrachten Werkzeuge anpassen.

Im folgenden wird die Erfindung anhand mehrerer in der Zeichnung dargestellter Ausführungsbeispiele näher erläutert. Es zeigen:

Fig. 1 eine ausschnittweise und teilweise geschnitten dargestellte Ansicht einer Werkzeugmaschine mit einer Werkzeugwechselvorrichtung in einem bestimmten Betriebszustand;

Fig. 2 eine Ansicht der Werkzeugmaschine nach Fig. 1 in einem anderen Betriebszustand;

Fig. 3 eine ausschnittweise und teilweise geschnitten dargestellte Ansicht einer abgewandelten Ausführungsform der Wechselvorrichtung an einer abgewandelten Werkzeugmaschine in einem bestimmten Betriebszustand der Teile;

Fig. 4 eine Ansicht wie Fig. 3 in einem anderen Betriebszustand der Teile;

Fig. 5 eine ausschnittweise dargestellte Draufsicht einer weiteren abgewandelten Ausführungsform der Wechselvorrichtung;

Fig. 6 eine Stirnansicht der Wechselvorrichtung nach Fig. 5;

Fig. 7 eine ausschnittweise dargestellte Ansicht der Werkzeugmaschine mit einer Wechselvorrichtung nach Fig. 5;

Fig. 8 eine teilweise geschnitten dargestellte Ansicht wie Fig. 7 in einem anderen Betriebszustand der Teile;

Fig. 9 ein ausschnittweise dargestelltes Blockschaltbild eines Teils der Werkzeugmaschine nach Fig. 1 und 2.

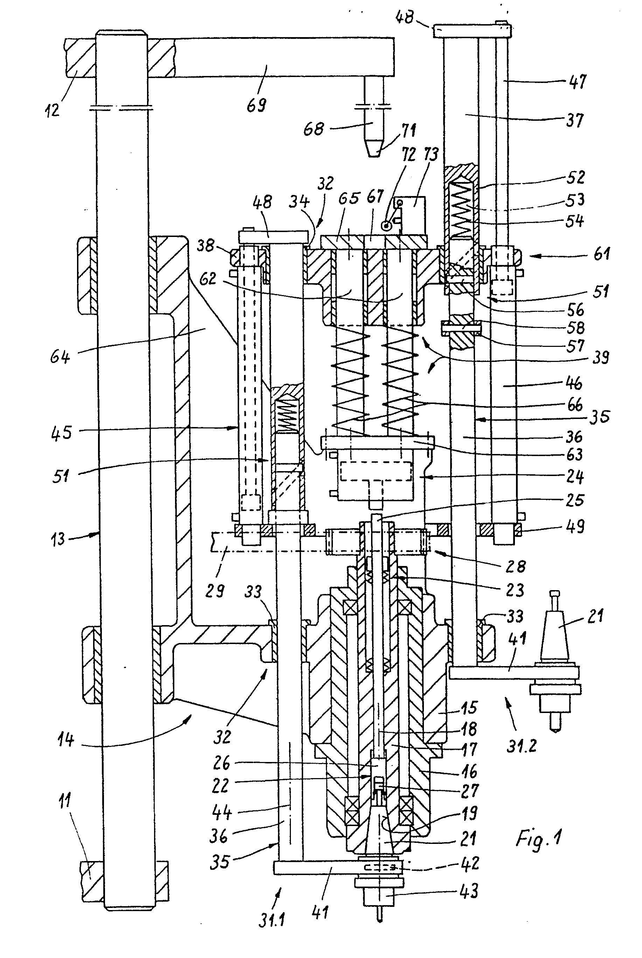

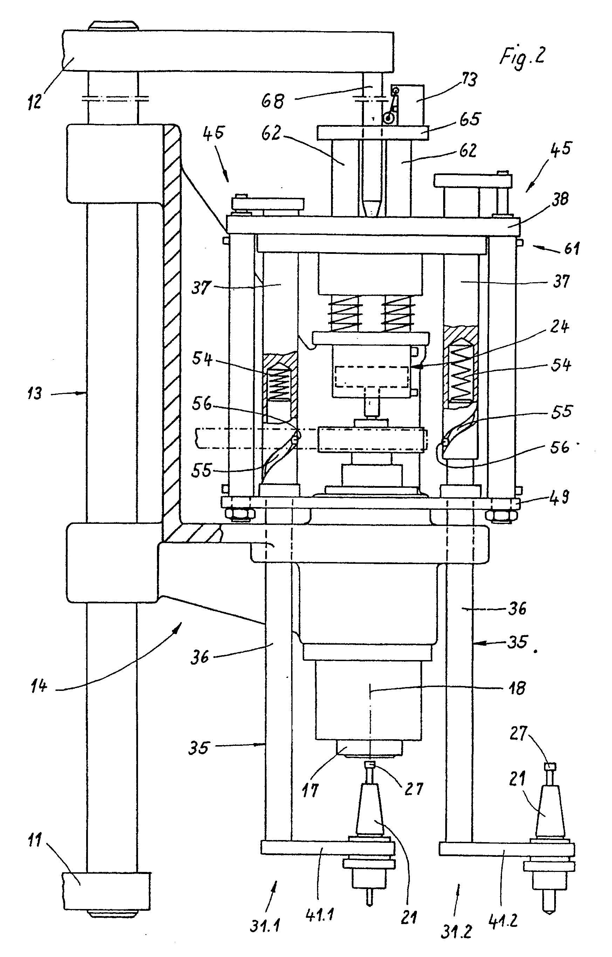

Die nur ausschnittweise dargestellte Werkzeugmaschine weist ein nicht dargestelltes Maschinengestell auf, an dem ein ebenfalls nicht dargestellter Werkzeugtisch herkömmlicher Bauart angeordnet ist. Außerdem ist am Maschinengestell eine primäre Längsführung für den Maschinenkopf vorhanden, an der dieser von Hand in der Höhe verstellt und daran festgeklemmt werden kann. Davon sind in Fig. 1 und 2 lediglich zwei Tragelemente 11 und 12 angedeutet, die ihrerseits eine sekundäre Längsführung 13 in Form einer Säulenführung tragen. Daran wiederum ist der eigentliche Arbeitskopf 14 in der Höhe verfahrbar geführt. Die Antriebsteile dazu sind nicht dargestellt.

Der Arbeitskopf 14 weist eine Aufnahme 15 für ein Spindelgehäuse 16 auf, in dem eine Hauptspindel 17 drehbar gelagert ist. In Richtung ihrer Längsachse 18 ist die Hauptspindel 17 gegenüber dem Spindelgehäuse 16 unverschieblich. Ihre Zustell- und Vorschubbewegungen werden ausschließlich mittels des Arbeitskopfes 14 und der sekundären Längsführung 13 ausgeführt. Die Hauptspindel 17 weist an ihrem dem Werkzeugtisch zugekehrten Ende, das in Fig. 1 und 2 unten gelegen ist, einen Aufnahmekegel 19 auf, in den einzelne Werkzeughalter 21 eingesetzt werden können. Die Hauptspindel 17 weist außerdem eine Spannvorrichtung 22 auf, mittels der ein in die Hauptspindel eingesetzter Werkzeughalter festgespannt werden kann. Diese Spannvorrichtung 22 ist mit einem Tellerfedersatz 23 als Kraftquelle, mit einem hydraulischen Kolbenantrieb 24 zum Lösen und mit einer Zugstange 25 ausgerüstet, die den Tellerfedersatz 23 führt und dessen Federkraft auf die Spannvorrichtung 22 überträgt. Zum Lösen der Spannvorrichtung 22 drückt der Kolbenantrieb 24 die Zugstange 25 entgegen der Kraft des Tellerfedersatzes 23 in Richtung auf den Aufnahmekegel 19 hin, wodurch die an ihrem vorderen Ende angeordneten Spannbacken 26 den Einspannkopf 27 des betreffenden Werkzeughalters 21 freigeben.

Die Hauptspindel 17 wird mittels eines Riementriebes 28 mit einem Zahnriemen 29 angetrieben, dessen nicht dargestellter Motorantrieb am Arbeitskopf 14 angeordnet ist.

Die Werkzeugmaschine ist mit einer Anzahl Werkzeugwechselvorrichtungen 31 ausgerüstet, die im folgenden kurz als Wechselvorrichtungen bezeichnet werden. Davon sind in Fig. 1 und 2 die beiden Wechselvorrichtungen 31.1 und 31.2 zu sehen. Die übrigen Wechselvorrichtungen, die in Bezug auf Fig. 1 teils vor und teils hinter der Zeichenebene angeordnet zu denken sind, wurden der besseren Klarheit der Zeichnung wegen nicht dargestellt.

Jede Wechselvorrichtung 31 weist eine am Arbeitskopf 16 angeordnete Längsführung 32 auf, deren Führungsbahn parallel zur Längsachse 18 der Hauptspindel 17 ausgerichtet ist. Dazu gehören je eine Führungsbuchse 33 und 34 und eine Führungsstange 35. Die Führungsstange 35 ist in der Länge zweigeteilt und aus den beiden Teilen 36 und 37 zusammengesetzt. Die Führungsbuchse 33 ist am Arbeitskopf 14 unmittelbar angebracht. Die Führungsbuchse 34 ist an einer Führungsplatte 38 angebracht, die ihrerseits mittels einer Längsführung 39 am Arbeitskopf 14 geführt ist.

Jede Führungsstange 35 weist an ihrem dem Werkstücktisch zugekehrten, in Fig. 1 unten gelegenen Ende einen Haltearm 41 auf, der mit dem unteren Teil 36 der Führungsstange starr verbunden ist. An dem von der Führungsstange 35 abgekehrten Ende weist jeder Haltearm 41 Halteelemente 42 auf, die in Fig. 1 und 2 im einzelnen nicht erkennbar sind. Mittels dieser Halteelemente 42 wird je ein Werkzeughalter 21 drehbar gehalten. Die Drehbarkeit kann dadurch gegeben sein, daß das Halteelement als Lager ausgebildet ist, oder dadurch, daß die Halteelemente etwa in Form von Gleitsteinen oder dergleichen ausgeführt sind, die ein gewisses Spiel zu den Gegenflächen an den Werkzeughaltern 21 haben. In jedem Falle sind die Halteelemente 42 so ausgebildet, und am Tragarm 41 so angeordnet, daß die durch sie vorgegebene Drehachse 43 eines von ihnen gehaltenen Werkzeughalters 21 von der Längsachse 44 der Führungsstange 35 einen Abstand hat, der zumindest annähernd gleich dem Abstand zwischen der Längsachse 44 der Führungsstange 35 und der Längsachse 18 der Hauptspindel 17 ist.

Jede Führungsstange 35 ist mit einem eigenen Kraftantrieb in Form eines Kolbenantriebes 45 gekoppelt, mittels dessen sie zwischen einer zurückgezogenen Stellung (Fig. 1, rechts) und einer ausgefahrenen Stellung (Fig. 1, links) relativ zum Arbeitskopf 14 und zur Arbeitsspindel 17 auf und ab bewegt werden kann. Von diesen Kolbenantrieben 45 sind die Arbeitszylinder 46 gemeinsam mit der Führungsplatte 38 verbunden. Jede Kolbenstange 47 ist mit einem Tragarm 48 der zugeordneten Führungsstange 35 verbunden. Die Arbeitszylinder 46 sind an ihrem von der Führungsplatte 38 abgekehrten Ende gemeinsam außerdem mit einer ringförmigen zweiten Führungsplatte 49 verbunden.

Jede Führungsstange 35 ist mit einer Schwenkvorrichtung 51 ausgerüstet, mittels der ihr Haltearm 41 um ihre Längsachse 44 geschwenkt werden kann. Diese Schwenkvorrichtung 51 ist an der Übergangsstelle vom unteren Teil 36 zum oberen Teil 37 der Führungsstange 35 angeordnet. Dazu ist das dem unteren Teil 36 zugekehrte Ende des oberen Teils 37 der Führungsstange 35 als Führungshülse 52 ausgebildet. Darin sind nicht dargestellte Gleitbuchsen angeordnet, zwecks besserer Führung des in die Führungshülse 52 sich hineinerstreckenden Endabschnittes des unteren Teils 36 der Führungsstange 35. Der Hohlraum 53 der Führungshülse 52 hat eine axiale Länge, die größer als die größte Eintauchtiefe des Teils 36 ist. In dem verbleibenden Teil des Hohlraums 53 ist eine Schraubendruckfeder 54 untergebracht, die die beiden Teile 36 und 37 der Führungsstange 35 in der Längsrichtung auseinanderdrückt.

Zur Schwenkvorrichtung 51 gehören eine sowohl in axialer Richtung wie auch in Umfangsrichtung verlaufende Steuerkurve und ein Nachführglied. Sie sind in Längsrichtung in demjenigen Längenabschnitt der Führungsstange 35 untergebracht, in dem die beiden Teile 36 und 37 einander überdecken. Die Steuerkurve ist demnach im Bereich der Führungshülse 52 als radial durchgehender Steuerschlitz 55 ausgebildet. Das Nachführglied ist als Nachführstift 56 ausgebildet, der in einem diametral angeordneten Durchgangsloch des Stangenteils 36 sitzt und daraus um etwa die Wandstärke der Führungshülse 52 daraus hervorragt und in den Steuerschlitz 55 hineinragt. Die Abmessungen des Nachführstiftes 56 sind auf die Abmessungen des Steuerschlitzes 55 so abgestimmt, daß beide Teile möglichst ohne großes Spiel Relativbewegungen zueinander ausführen können. Das dem Stangenteil 36 zugekehrte Ende des Steuerschlitzes 55 dient zusammen mit dem Nachführstift 56 zugleich als Längsanschlag für die beiden unter der Wirkung der Feder 54 stehenden beiden Teile 36 und 37 der Führungsstange 35. Zur Schwenkvorrichtung 51 gehört noch ein anderer Anschlag. Dieser wird einerseits durch die zweite Führungsplatte 49 und andererseits durch einen Anschlagring 57 gebildet, der mittels eines Befestigungsstiftes 58 am unteren Teil 36 der Führungsstange 35 angeordnet ist. Der Anschlagring 57 kann mit einem Lager ausgerüstet sein, das sich an der Führungsplatte 49 anlegt. Der Anschlagring 57 kann stattdessen auch selbst als Lager ausgebildet sein. Der Anschlagring 57 ist dabei so angeordnet, daß er bei einer Ausfahrbewegung der Führungsstange 35 gerade dann an der zweiten Führungsplatte 49 anschlägt, wenn der Stangenteil 36 mit dem Tragarm 41 seine Endstellung zunächst gegenüber der zweiten Führungsplatte 49 erreicht hat. Daraus ergibt sich dann zusammen mit einer bestimmten Endstellung der beiden Führungsplatten 38 und 49 gegenüber dem Arbeitskopf 14 die gewünschte Endstellung des Tragarms 41 gegenüber dem Spindelgehäuse 16 (Fig. 2).

Wie aus Fig. 1 und noch mehr aus Fig. 2 zu entnehmen ist, bilden die beiden Führungsplatten 38 und 49 und die Arbeitszylinder 46 zusammen einen gemeinsamen Träger 61, für sämtliche Wechselvorrichtungen 31. Dieser gemeinsame Träger 61 wird hauptsächlich von der Längsführung 39 geführt, die zwei Führungssäulen 62 aufweist. Diese sind an ihrem unteren Ende mit einer Trägerplatte 63 fest verbunden, die an Seitenwangen 64 des Arbeitskopfes 14 befestigt ist. Diese Trägerplatte 63 dient zugleich als Halterung für den Kolbenantrieb 24, mittels dessen die Spannvorrichtung 22 gelöst werden kann. Die beiden Führungssäulen 62 sind außerdem an ihrem oberen Ende mit einer gemeinsamen Anschlagplatte 65 verbunden. Jede der beiden Führungssäulen 62 ist von einer Schraubendruckfeder 66 umgeben, die sich einerseits an der unteren Trägerplatte 63 und andererseits an der ersten Führungsplatte 38 abstützen. Die beiden Schraubendruckfedern 66 sind so ausgelegt, daß sie den gemeinsamen Träger 61 mit allen daran angebrachten Teilen, insbesondere mit allen Wechselvorrichtungen 31, in der angehobenen Stellung (Fig. 1) halten, in der der gemeinsame Träger 61 mit seiner Führungsplatte 38 an der Anschlagplatte 65 anliegt.

In der Mitte der Anschlagplatte 65 ist ein Durchgangsloch 67 vorhanden. In der Fluchtlinie dieses Durchgangsloches ist ein Anschlagstift 68 angeordnet, der an einem Tragarm 69 befestigt ist, der als Verlängerung des Tragelementes 12 ausgebildet ist, welches mit dem nicht dargestellten Arbeitskopf der Werkzeugmaschine verbunden ist. Die lichte Weite des Durchgangsloches 67 ist größer als der Außendurchmesser des Anschlagstiftes 60, so daß dieser frei durch das Durchgangsloch hindurchtreten kann, wenn der Arbeitskopf 14 an der Säulenführung 13 in die Höhe gefahren wird. In einer bestimmten Höhenstellung des Arbeitskopfes 14 trifft der Anschlagstift 68 auf die obere Führungsplatte 38 und hindert den gemeinsamen Träger 61 an einer weiteren Aufwärtsbewegung gemeinsam mit dem Arbeitskopf 14. Der Träger 61 führt daher eine Relativbewegung gegenüber dem Arbeitskopf 14 aus, wie das aus einem Vergleich der beiden Fig. 1 und 2 ersichtlich ist. Die dabei miteinander zusammenwirkenden Teile sind hinsichtlich ihrer Ausbildung und Anordnung so aufeinander abgestimmt, daß die relative Bewegungsstrecke des Trägers 61 gegenüber dem Arbeitskopf 14 mindestens gleich dem Be- und Entladehub der Werkzeughalter 21 an der Hauptspindel 17 ist, der aus einem Vergleich der Relativstellung der Wechselvorrichtung 31.1 gegenüber der Hauptspindel 17 in Fig. 1 und 2 ersichtlich ist. Im einzelnen ergibt sich diese Bewegungsstrecke aus dem Maß, um das der Anschlagstift 68 nach unten in die Bewegungsbahn der Führungsplatte 38 hineinragt, und zwar bezogen auf die höchste Höhenstellung des Arbeitskopfes 14, in die er durch seinen Vorschubantrieb verfahren wird.

Der dem Träger 61 zugekehrte Endabschnitt des Anschlagstiftes 68 ist kegelstumpfförmig ausgebildet. Die Mantelfläche des Kegelstumpfes bildet eine Anlaufschräge und damit eine Steuerfläche 71 für ein Tastglied 72 eines hydraulischen Schalters 73. Dieser Schalter 73 schaltet die Betriebsmittelzufuhr zu dem Kolbenantrieb 24 ein und aus. Der Schalter 73 ist in Bezug auf die Steuerfläche 72 so angeordnet, daß der Kolbenantrieb 24 dann betätigt wird, wenn der Arbeitskopf 14 über diejenige Betriebsstellung hinaus aufwärts fährt, bis zu der die Spannvorrichtung 22 geschlossen bleiben soll. Bei einer weiteren Aufwärtsbewegung des Arbeitskopfes 14 bis hin in die Werkzeugwechselstellung (Fig. 2) wird der Kolbenantrieb 24 über den Schalter 73 betätigt und die Spannvorrichtung 22 gelöst, so daß von da an der in der Hauptspindel 17 sitzende Werkzeughalter 21 von der zugehörigen Wechselvorrichtung 31 im Zuge der dann einsetzenden Relativbewegung zwischen dem gemeinsamen Träger 61 und dem Arbeitskopf 14 aus der Hauptspindel 17 herausgefahren werden kann. Bei dem umgekehrten Bewegungablauf wird die Spannvorrichtung 22 erst dann wieder geschlossen, wenn durch die umgekehrte Relativbewegung zwischen dem gemeinsamen Träger 61 und dem Arbeitskopf 14 der dann bereitgestellte Werkzeughalter 21 in die Hauptspindel 17 vollständig eingesetzt ist.

Die Arbeitsweise der Werkzeugmaschine und ihrer Werkzeugwechselvorrichtungen ist folgende:

In der aus Fig. 1 ersichtlichen Betriebsstellung des Arbeitskopfes 14 sitzt der von der Wechselvorrichtung 31.1 gehaltene Werkzeughalter 21 mit seinem Werkzeug in der Hauptspindel 17. Alle übrigen Wechselvorrichtungen und ihre Werkzeughalter sind währenddessen durch ihre Kolbenantrieb 45 in ihre Ruhe- oder Magazinstellung zurückgezogen, wie die Wechselvorrichtung 31.2 in Fig. 1. Dabei sind die beiden Teile 36 und 37 der Führungsstange 35 um das größtmögliche Maß in axialer Richtung auseinandergeschoben, wodurch mittels der Schwenkvorrichtung 51 der Tragarm 41 eine von dem Spindelgehäuse 16 und seiner Aufnahme 15 ausreichend weit entfernte Schwenkstellung einnimmt. Diese ist in Fig. 1 lediglich der Deutlichkeit halber in radialer Ausrichtung in Bezug auf die Längsachse 18 der Hauptspindel 17 dargestellt. In Wirklichkeit beträgt der Schwenkwinkel zwischen der Betriebsstellung und der Ruhestellung weniger als 180°. In der Betriebsstellung des Arbeitskopfes 14 und eines der Werkzeuge, z.B. des Werkzeuges an der Wechselvorrichtung 31.1, nimmt der gemeinsame Träger 61 eine Höhenstellung ein, die einen so großen Abstand vom Anschlagstift 68 hat, daß sowohl der Träger 61 an der Anschlagplatte 65 anliegt, wie auch das Tastglied 72 des Schalters 73 von der Steuerfläche 71 des Anschlagstiftes 68 frei ist. Der hydraulische Schalter 73 ist dabei geschlossen und der Kolbenantrieb 24 befindet sich in seiner inaktiven Stellung, in der sein Kolben von der Zugstange 25 zurückgezogen ist und die Spannvorrichtung 22 daher geschlossen ist.

Die Zustellbewegung für das Werkzeug und die Vorschubbewegung für die spanabhebende Bearbeitung werden von dem nicht dargestellten Verstellantrieb des Arbeitskopfes 14 bewirkt. Nach der Beendigung des Bearbeitungsvorganges mit diesem Werkzeug wird der Arbeitskopf 14 durch seinen Verstellantrieb vom Werkzeugtisch weg hochgefahren, und zwar bis über die höchste Betriebsstellung hinaus. Sobald dabei durch die Steuerfläche 71 des Anschlagstiftes 68 der Schalter 73 betätigt wird, wird durch den Arbeitskolben 24 die Spannvorrichtung 22 gelöst. Kurz dannach erreicht der gemeinsame Träger 61 den Anschlagstift 68 und wird von diesem an einer weiteren Aufwärtsbewegung gehindert, währenddessen der Arbeitskopf 14 weiter aufwärtsfährt. Dadurch wird die Wechselvorrichtung 31.1 aus der aus Fig. 1 ersichtlichen Relativstellung gegenüber der Arbeitsspindel relativ zu dieser in ihre aus Fig. 2 ersichtlichen Zwischenstellung verschoben. Danach wird der zugehörige Kolbenantrieb 45 betätigt, der die Führungsstange 35 nach oben zieht. Dabei wird zunächst nur der obere Stangenteil 37 mit dem Steuerschlitz 55 angehoben, währenddessen die Feder 54 den unteren Stangenteil 36 weiterhin in der Anlage an der unteren Führungsplatte 49 angedrückt hält. Infolge der dadurch entstehenden axialen Relativbewegung der beiden Teile der Führungsstange 35 wird der Nachführstift 56 in dem Steuerschlitz 55 entlangbewegt, wodurch der untere Teil 36 der Führungsstange 35 sich um seine Längsachse 44 dreht und dabei den Tragarm 41 aus derjenigen Schwenkstellung, in der der von ihm gehaltene Werkzeughalter 21 in der Fluchtlinie der Längsachse 18 der Hauptspindel 17 steht, heraus in eine solche Schwenkstellung bewegt, wie sie in Fig. 2 rechts bei der Wechselvorrichtung 31.2 dargestellt ist, in der sich der vom Tragarm 41 gehaltene Werkzeughalter 21 außerhalb der relativen Bewegungsbahn des Spindelgehäuses 16 und der Aufnahme 15 befindet.

Während diese Bewegungsvorgänge ablaufen, wird das in der Bearbeitungsfolge nächstfolgende Werkzeug in die Bereitschaftsstellung für die Übernahme in die Hauptspindel gebracht. Dazu wird der Kolbenantrieb 45 beispielsweise der Wechselvorrichtung 31.2 betätigt, wodurch ihre Führungsstange 35 von der aus Fig. 1 ersichtlichen angehobenen Stellung gegenüber dem gemeinsamen Träger 61 abgesenkt wird. Dabei sind infolge der Wirkung der Feder 54 die beiden Stangenteile 36 und 37 relativ zueinander auseinandergeschoben. Bei dieser Abwärtsbewegung trifft zuerst der Anschlagring 57 auf die untere Führungsplatte 49 und verhindert damit eine weitere Absenkbewegung des unteren Stangenteils 36. Dieser Zustand ist in Fig. 2 rechts dargestellt. Bei einer weiteren Abwärtsbewegung des oberen Stangenteils 37 bewegt sich der Nachführstift 56 entlang dem Steuerschlitz 55 und dreht dabei den unteren Stangenteil 36 um seine Längsachse. Dabei wird der in der tiefsten Höhenstellung stehende Haltearm 41.2 aus der ausgeschwenkten Stellung gemäß Fig. 2 rechts, in diejenige Schwenkstellung bewegt, in der der von ihm gehaltene Werkzeughalter 21 in der Fluchtlinie der Längsachse 18 der Hauptspindel 17 steht, wie das in Fig. 2 für den Werkzeughalter am Tragarm 41.1 gezeigt ist. Der Werkzeughalter 21 am Tragarm 41.2 steht dann in seiner Bereitschaftsstellung gegenüber der Hauptspindel 17.

Der Arbeitskopf 14 wird mittels seines Antriebes abgesenkt. Dabei führt der gemeinsame Träger 61 eine Relativbewegung gegenüber dem Arbeitskopf 14 aus, bis die obere Führungsplatte 38 wieder an der Anschlagplatte 65 anliegt. Dadurch wird der in der Bereitschaftsstellung stehende Werkzeughalter 21 am Tragarm 41.2 in die Haupt

spindel 17 hineingeschoben bis er am Aufnahmekegel 19 fest anliegt.

Bei einer geringfügig weiteren Absenkbewegung des Arbeitskopfes 14 wird der Schalter 73 wieder umgeschaltet und dadurch der Arbeitskolben 24 in seine Ruhestellung zurückgezogen, wodurch wiederum die Spannvorrichtung 22 durch den Tellerfedersatz 23 gespannt wird. Der neu eingesetzte Werkzeughalter 21 ist dann an der Arbeitsspindel 17 fest angekoppelt.

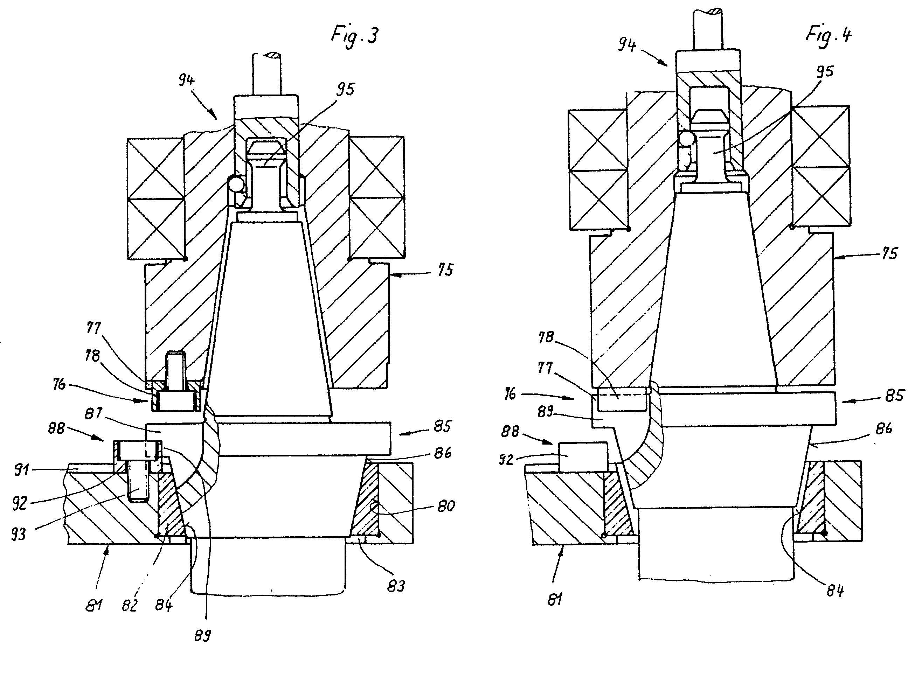

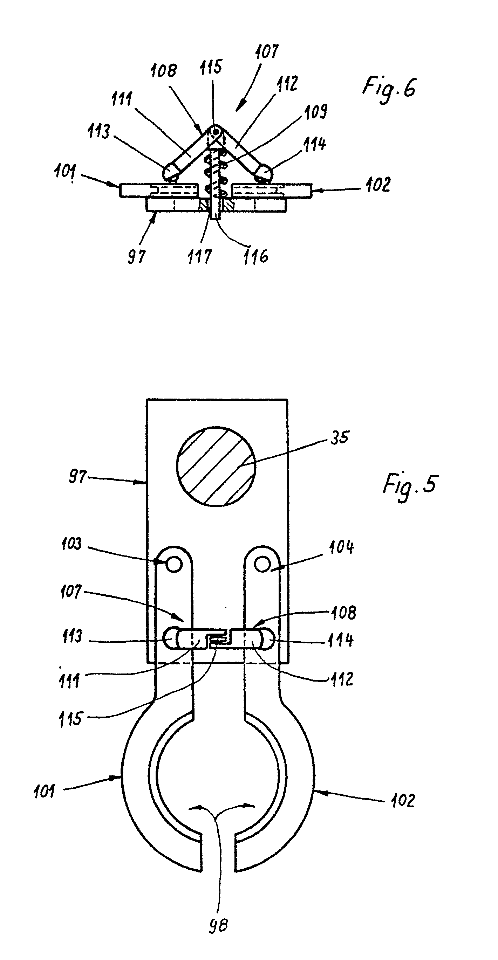

Aus Fig. 3 und 4 ist eine abgewandelte Ausführungsform der Werkzeugwechselvorrichtungen ersichtlich. Dabei ist gleichzeitig eine Abwandlung der Werkzeugmaschine selbst ersichtlich. Ihre Hauptspindel 75 weist eine Mitnehmervorrichtung 76 auf. Diese ist als axiale Nut- und Federverbindung ausgebildet, bei der in einer stirnseitigen Mitnehmernut 77 der Hauptspindel 75 ein sogenannter Mitnehmerstein 78 eingesetzt und mittels einer Befestigungsschraube 79 festgehalten ist.

Bei der abgewandelten Wechselvorrichtung weist der Haltearm 81 als Halteelement einen Haltering 82 auf, der in einem Durchgangsloch 83 des Haltearms 81 in eine auf ihr abgestimmte Ausnehmung 80 eingesetzt ist. Der Haltering 82 weist eine Auflagefläche 84 in Form einer Kegelstumpffläche auf. Der Haltering 72 ist aus einem abriebfesten Kunststoff hergestellt. Am Werkzeughalter 85 ist eine auf die Auflagefläche 84 abgestimmte Auflagefläche 86 vorhanden. Die Mantellinien der beiden kegelstumpfförmigen Auflagenflächen 84 und 86 haben gegenüber der Längsachse eine Neigung die größer als der Reibungswinkel zwischen den beiden Auflageflächen ist.

Im Hinblick auf die Mitnehmervorrichtung 76 an der Hauptspindel 75 weist der Werkzeughalter 85 eine Mitnehmernut 87 auf, die auf den Mitnehmerstein 78 abgestimmt ist. Für den selbsttätigen Werkzeugwechsel wird die Hauptspindel 75 stets in der gleichen Drehrichtung stillgesetzt. Damit die Mitnehmernut 87 am Werkzeughalter 85 ebenfalls auf diese Drehstellung eingestellt ist, ist zwischen dem Tragarm 81 und dem Werkzeughalter 85 eine Positioniervorrichtung 88 vorhanden. Diese ist ebenfalls als Nut-und Federverbindung ausgebildet. Die zugehörige Nut 89 am Werkzeughalter 85 ist in der gleichen Umfangsposition wie die Mitnehmernut 87 angeordnet, wobei die beiden Nuten miteinander fluchten, indem sie ineinander übergehen. Das wird dadurch erreicht, daß sie in einem Arbeitsgang gemeinsam hergestellt werden. Als weiterer Teil der Positioniervorrichtung ist am Tragarm 81 in einer Nut 91 eine Feder 92 angeordnet, die genau gleich wie der Mitnehmerstein 78 ausgebildet ist und dadurch zugleich auf die Positioniernut 89 wie auch auf die Mitnehmernut 87 des Werkzeughalters 85 abgestimmt ist. Die Feder 92 ist mittels einer Befestigungsschraube 93 am Tragarm 81 befestigt.

Das Einsetzen eines Werkzeughalters 85 in die Hauptspindel 75 erfolgt in weitgehend gleicher Weise wie es zuvor anhand der Fig. 1 und 2 bei den Wechselvorrichtungen 31 geschildert wurde. Die einzige Abweichung besteht darin, daß der Werkzeughalter 85 am Tragarm 81 nach dem Einschwenken auf die Fluchtlinie der Hauptspindel 75 in axialer Richtung lediglich soweit in die Hauptspindel 75 eingefahren wird, daß ihre Spannvorrichtung 94 den Spannkopf 95 des Werkzeughalters 85 erfassen kann und den gesamten Werkzeughalter 85 bis in seine Betriebsstellung in die Hauptspindel 75 einziehen kann, wie das aus Fig. 4 ersichtlich ist. Dabei wird der Werkzeughalter 85 mit seiner Auflagefläche 68 von der Auflagefläche 84 am Tragarm 81 abgehoben.

In der Ausgangsstellung war der Werkzeughalter 85 über die Positioniervorrichtung 88 gegenüber dem Tragarm 81 ausgerichtet. Nachher ist er mittels der Mitnehmervorrichtung 76 gegenüber der Hauptspindel 75 ausgerichtet.

Damit während des Überganges von der einen Axialstellung (Fig. 3) zu der anderen Axialstellung (Fig. 4) eine unwillkürliche Verdrehung des Werkzeughalters 85 ausgeschlossen ist, sind die freie Höhe des Mitnehmersteins 78, die freie Höhe der Feder 92, die axiale Ausdehnung der ineinander übergehenden Nuten 87 und 89 sowie die Bewegungsstrecke des Werkzeughalters 85 so aufeinander abgestimmt, daß die Eingriffsstrecke der Positioniervorrichtung 88 und der Mitnehmervorrichtung 76 einander überschneiden in Bezug auf den Werkzeughalter 85 einander überschneiden. Das gleiche gilt selbstverständlich für den umgekehrten Bewegungsablauf beim Absenken des Werkzeugkopfes 85 aus der Betriebsstellung nach Fig. 4 in die Übernahmestellung nach Fig. 3.

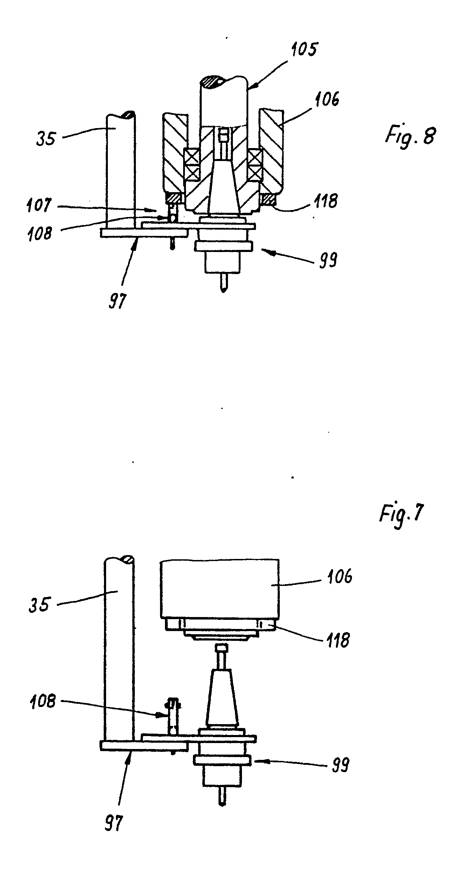

Aus Fig. 5 bis 8 ist eine weitere abgewandelte Ausführungsform der Werkzeugwechselvorrichtungen ersichtlich. Diese Abwandlung betrifft ebenfalls wieder die Ausbildung des Haltearmes 97, seiner Halteelemente 98 und des Werkzeughalters 99.

Am Haltearm 97 sind die Halteelemente 98 in Form von Ringrippenabschnitten an zwei Schwenkarmen 101 und 102 angeordnet. Diese sind am Haltearm 97 mittels je eines Schwenklagers 103 bzw. 104 schwenkbar gelagert, deren Schwenkachse zumindest annähernd parallel zur Längsachse der Hauptspindel 105 und des Spindelgehäuses 106 ausgerichtet ist. Die beiden Schwenkarme 101 und 102 werden mittels einer Betätigungsvorrichtung 107 betätigt, die ein Kniehebelgestänge 108 und eine Schließfeder 109 aufweist. Von diesem Kniehebelgestänge 108 ist die Hebelstange 111 mit dem Schwenkarm 101 und die Hebelstange 112 mit dem Schwenkarm 102 gelenkig verbunden. Da hier zwei Schwenkbewegungen stattfinden, deren Schwenkebenen einander rechtwinklig schneiden, sind die Schwenkarme 101 und 102 und die Hebelstangen 111 und 112 mittels je eines Kugelgelenkes 113 bzw. 114 miteinander verbunden. Am Kniegelenk 115 der beiden Hebelstangen 111 und 112 ist ein Führungsbolzen 116 mit angelenkt, der in einem Führungsloch 117 des Tragarmes 97 in paralleler Ausrichtung zur Längsachse der Hauptspindel 105 geführt ist. Dadurch wird das Kniegelenk 115 in lotrechter Richtung geführt, so daß das Kniehebelgestänge 108 nicht nach der Seite umkippen kann und außerdem eine genau gegenläufige Betätigungsbewegung der Schwenkarme 101 und 102 gewährleistet ist. Der Führungsbolzen 16 führt zugleich die Schließfeder 109, die sich einerseits am Tragarm 97 und andererseits am Kniegelenk 105 abstützt und das Kniegelenk dadurch vom Tragarm 97 wegdrückt. Dadurch werden die Schwenkarme 101 und 102 in ihre Schließstellung gezogen.

Als weiterer Teil der Betätigungsvorrichtung 107 ist in der axialen Bewegungsbahn des Kniehebelgestänges 108 ein Anschlagring 118 angeordnet, der am Spindelgehäuse 106 befestigt ist. Der Anschlagring 118 ist so ausgebildet und auf die axiale Bewegung des Tragarmes 97 und des Kniehebelgestänges 108 abgestimmt, daß bei der Annäherung des Werkzeughalters 99 an die Hauptspindel 105 der Anschlagring 118 das Kniehebelgestänge 108 dann betätigt und die beiden Schwenkarme 101 und 102 dann in ihre Freigabestellung verschwenkt, wenn der Werkzeughalter 99 bereits diejenige axiale Stellung erreicht hat, in der er von der Spannvorrichtung der Hauptspindel 105 erfaßt werden kann und erfaßt wurde und sowohl durch eine eigene Spannbewegung wie auch durch die weitere Annäherungsbewegung des Tragarmes 97 vollens in die Hauptspindel 105 eingesetzt wird. Eine Voreilung der in einer kürzeren Zeitspanne ablaufenden Spannbewegung der Spannvorrichtung in der Hauptspindel 105 gegenüber der in einer längeren Zeitspanne und langsamer erfolgenden Annäherungsbewegung des Tragarmes 97 und der damit einhergehenden Betätigungsbewegung des Kniehebelgestänges 108 kann dadurch berücksichtigt werden, daß am Werkzeughalter 99 die Aufnahmenut für die Spannelemente 98 in axialer Richtung mit einer solchen lichten Weite ausgeführt wird, daß der Werkzeughalter 99 gegenüber den Schwenkarmen 101 und 102 angehoben werden kann.

Soweit der ruhende Anschlagring 118 für die Betätigung des Kniehebelgestänges 108 nicht ausreicht oder aus sonstigen Gründen eine aktive Verstellung und Betätigung des Anschlagringes 118 erwünscht oder erforderlich ist, kann der Anschlagring 118 mittels einer Führung am Spindelgehäuse 106 in axialer Richtung bewegbar geführt werden und mit einem Kolbenantrieb gekoppelt werden.

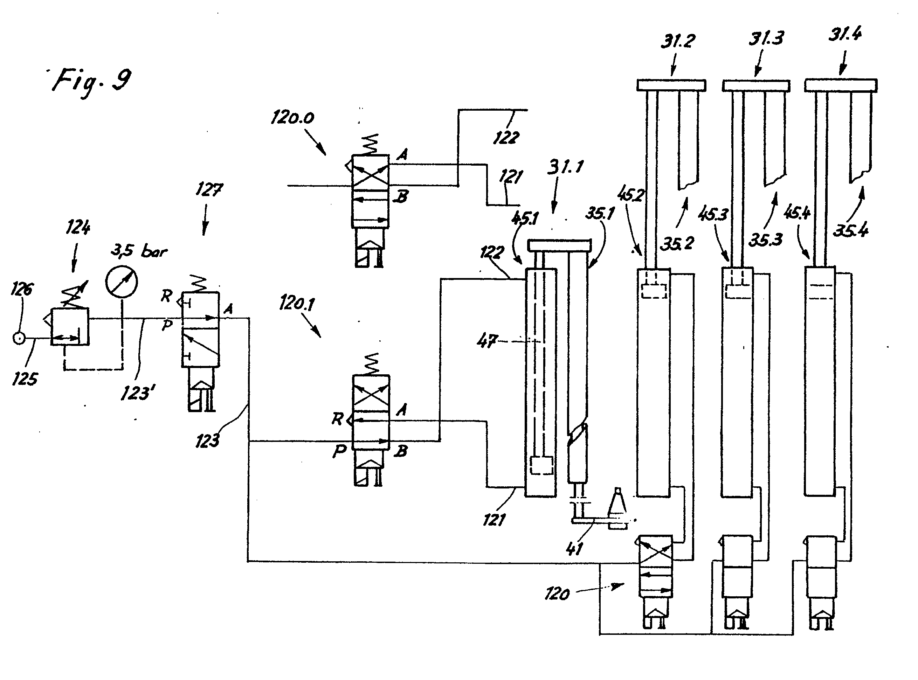

Die Auswahl der einzelnen Werkzeuge und die weiter vorne geschilderten Bewegungsvorgänge für das Auswechseln der Werkzeuge werden durch eine Programmsteuerung der Werkzeugmaschine gesteuert. Ein Teil dieser Steuerung ist aus Fig. 9 ersichtlich, wobei die vier dargestellten Wechselvorrichungen 31 zur besseren Unterscheidung mit 31.1 ... 31.4 bezeichnet sind, was sinngemäß auch für ihre Teile gilt.

Bei jeder Wechselvorrichung 31 wird die Zufuhr der Druckluft zur einen Kolbenseite und die Entlüftung der anderen Kolbenseite des Kolbenantriebes 45 von einem Magnetventil 120 gesteuert, das als 4/2-Wegeventil herkömmlicher Bauart ausgebildet ist und als Umsteuerventil wirkt. Es hat die Anschlüsse A und B für die Zylinderzuleitungen, den Anschluß P für die Druckluft-Zuleitung und den Anschluß R für die Entlüftung ins Freie. In Fig. 3 ist für den Kolbenantrieb 45.1 der Wechselvorrichtung 31.1 dessen Umsteuerventil in seinen beiden Schaltstellungen dargestellt, von denen die Null oder Ruhestellung mit 120.0 und die Arbeitsstellung mit 120.1 bezeichnet ist. Bei jedem Kolbenantrieb 45 ist der Bodenanschluß 121 mit dem Anschluß A und der Deckelanschluß 122 mit dem Anschluß B des Umsteuerventils 120 verbunden. Der Anschluß P der Umsteuerventile 120 sämtlicher Wechselvorrichtungen 31 ist an eine gemeinsame Druckluft-Versorgungsleitung 123 angeschlossen.

Da die Ruhestellung der Wechselvorrichtungen 31 diejenige ist, in der ihre Führungsstange 35 angehoben ist, und da diese mit der Kolbenstange 47 des zugehörigen Kolbenantriebes 45 verbunden ist, verbindet das Umsteuerventil 120 in seiner Ruhestellung 120.0 die gemeinsame Versorgungsleitung 123 mit dem Bodenanschluß 121 des Kolbenantriebes 45. Der Deckelanschluß 122 ist über das Umsteuerventil 120 ins Freie entlüftet. Wenn das Umsteuerventil 120 von der Programmsteuerung der Werkzeugmaschine in seine Arbeitsstellung 120.1 umgeschaltet wird, verbindet es den Deckelanschluß 122 mit der Versorgungsleitung 123 und entlüftet den Bodenanschluß 122. Dadurch wird die Kolbenstange 47 in den Arbeitszylinder 46 eingezogen und die Führungsstange 35 abgesenkt. Dabei folgen die in Fig. 1 und Fig. 2 in drei Stufen dargestellten Bewegungsvorgänge zügig aufeinander, d.h. die betreffende Führungsstange 35 wird von ihrer in Fig. 1 rechts dargestellten angehobenen Stellung in einem Zuge bis zu ihrer in Fig. 1 oder Fig. 2 links dargestellten tiefsten Stellung abgesenkt. Zwischendurch trifft ihr Anschlagring 57 auf die Führungsplatte 49 auf, wodurch der untere Stangenteil 36 seine damit erreichte Höhenstellung beibehält. Der obere Stangenteil 27 wird indessen noch eine gewisse Strecke weiter abgesenkt, bis sein unterer Rand auf den Anschlagring 57 auftrifft und die Absenkbewegung der Führungsstange 35 und ihres Kolbenantriebes 45 beendet. Die Kolbenstange 35 erreicht die in Fig. 2 rechts dargestellte Höhenstellung mit einer gewissen Geschwindigkeit. Bei der nun beginnenden Drehbewegung des unteren Stangenteils 36 gegenüber dem oberen Stangenteil 37, die durch die Schwenkvorrichtung 51 bewirkt wird, kann der Anfangsruck der Drehbewegung des Stangenteils 36 und der Schwenkbewegung des Haltearmes 41.2 dadurch gemildert werden, daß der Verlauf der Steuerkurve 55 zumindest annähernd parallel zur Längsachse der Führungsstange 35 beginnt und erst allmählich, und zwar stetig zunehmend, in die Umfangsrichtung übergeht. Da für die Steuerkurve 55 aber nur ein begrenzter Höhenabschnitt zur Verfügung steht und ein beträchtlicher Schwenkwinkel zurückzulegen ist, läßt sich die Drehbewegung des Stangenteils 36 und die Schwenkbewegung des Haltearmes 41 am Ende nicht in gleicher Weise sanft abfangen. Um Überlastungen der miteinander zusammenwirkenden Teile dennoch zu vermeiden, ist in die gemeinsame Versorgungsleitung 123 ein einstellbares Druckminderventil 124 eingeschaltet. Dieses wird für die Kolbenantriebe 45 auf denjenigen Druckwert eingestellt, bei dem ihre Kolbenkraft auf der Deckelseite nur um einen gewissen Wert über die Gegenkraft der Schraubendruckfeder 54 zwischen den beiden Stangenteilen 36 und 37 hinausgeht, die diese beim Zusammenschieben der beiden Stangenteile erreicht hat, wenn der Stangenteil 37 auf dem Anschlagring 57 aufsetzt. Durch diese Maßnahme wird die Drehbewegung des Stangenteils 36 durch die anwachsende Gegenkraft der Feder 59 zunehmend verzögert. Der Drehkraftüberschuß soll dabei aber noch so groß sein, daß unabhängig von etwaigen Schwankungen der Reibungskräfte in den verschiedenen Gleit- und Lagerstellen die Drehendstellung der Halteelemente 42 des Haltearmes 41 in der Fluchtlinie der Längsachse 18 der Hauptspindel 17 sicher erreicht wird. Wenn der normale Arbeitsdruck im Druckluftnetz 125 mit der Druckquelle 126 üblicherweise 6 bar beträgt, wird der verminderte Druck in der gemeinsamen Versorgungsleitung 123 der Kolbenantriebe 45 auf beispielsweise 3,5 bar eingestellt, wobei dieser Wert u.a. von der Größe der Kolbenfläche der Kolbenantriebe, von den zu bewegenden Massen und von den Kennwerten der Schraubendruckfeder 59 abhängt.

Bei der Aufwärtsbewegung der Führungsstange 35 aus der in Fig. 2 links dargestellten untersten Höhenstellung in die in Fig. 1 rechts dargestellte oberste Höhenstellung erfolgt das Ausschwenken des Haltearmes 41.1 und das Anheben der Führungsstange 35 ebenfalls in einem Zuge. Im ersten Abschnitt der Aufwärtsbewegung des Stangenteils 37 von der Anlage am Anschlagring 57 (Fig. 2 links) bis zum Abheben des Anschlagringes 57 von der Führungsplatte 49 addieren sich die Kolbenkraft der Bodenseite des Kolbenantriebes 45 und die Federkraft der Schraubendruckfeder 54 zwischen den beiden Stangenteilen 36 und 37. Da der Auslauf der Steuerkurve 55 wegen der begrenzten Höhe auf diese zusätzliche Beschleunigung nicht abgestimmt werden kann, wird für den Rückweg der Führungsstange 35 eine andere Maßnahme zur Verringerung der Massenkräfte eingeführt.

In die gemeinsame Versorgungsleitung 123 ist hinter dem Druckminderventil 124 ein Entlüftungsventil 127 eingeschaltet. Es ist ein Magnetventil herkömmlicher Bauart und als 3/2-Wegeventil ausgebildet. Es hat einen Anschluß P für die vom Druckminderventil 124 herkommende Druckluftzuleitung 123' als Teil der gemeinsamen Versorgungsleitung 123, einen Anschluß A für die Zylinderzuleitung, nämlich die gemeinsame Versorgungsleitung 123, und einen Anschluß R für die Entlüftung ins Freie. In der Ruhestellung des Entlüftungsventils 127 (Fig. 3) ist die gemeinsame Versorgungsleitung 123 über das Druckminderventil 124 und das Druckluftnetz 125 mit der Druckquelle 126 verbunden. In der Arbeitsstellung des Entlüftungsventils 127 wird die Druckluftzuleitung 123' abgesperrt und die gemeinsame Versorgungsleitung 123 aller Kolbenantriebe 45 über den Anschluß R ins Freie entlüftet.

Eine kurze Zeitspanne vor dem Zeitpunkt, in welchem die Programmsteuerung der Werkzeugmaschine das Umsteuerventil 120 des abgesenkten und anzuhebenden Kolbenantriebes 45.1 von der Arbeitsstellung 120.1 in die Ruhestellung 120.0 umschaltet, schaltet sie das Entlüftungsventil 127 von der Ruhestellung in die Arbeitsstellung um. Dadurch werden sowohl die gemeinsame Versorgungsleitung 123 wie auch sämtliche Kolbenantriebe 45 auf der Bodenseite vorübergehend entlüftet. Der Druck in diesem zusammenhängenden Drucksystem sinkt ab. Nach Ablauf dieser Zeitspanne schaltet die Programmsteuerung der Werkzeugmaschine das Umsteuerventil 120 des Kolbenantriebes 45.1 programmgemäß von der Arbeitsstellung in die Ruhestellung um, wodurch die Bodenseite dieses Kolbenantriebes 45.1 ebenfalls mit der gemeinsamen Versorgungsleitung 123 verbunden wird, wie das bei den übrigen Kolbenantrieben 45.2 ... 45.4 der Fall ist. Da der Überdruck diesem Drucksystem zwar abgesenkt aber nicht Null ist, beginnt der Kolben des Kolbenantriebes 45.1 seine Aufwärtsbewegung mit verminderter Beschleunigung. Soweit zu diesem Zeitpunkt das Entlüftungsventil 127 noch in der Arbeitsstellung steht, also die gemeinsame Versorgungsleitung 123 noch entlüftet wird, bewegt sich der Kolben des Kolbenantriebes 45.1 sogar mit abnehmender Beschleunigung aufwärts. Aber selbst wenn das Zeitschal glied in der Programmsteuerung das Entlüftungsventil 12 zu diesem Zeitpunkt schon in die Ruhestellung umgeschaltet hat und die gemeinsame Versorgungsleitung 123 wieder mit der Druckquelle 126 verbunden ist, steigt der Druck in diesem Drucksystem nicht schlagartig sondern nur allmählich an, weil nämlich mit den Kolbenantrieben 45.2 ... 45.4 ein verhältnismäßig großes Gesamtvolumen zum Teil entlüftet wurde, das erst wieder aufgefüllt werden muß, ehe der Druck darin den Druckwert de Druckluftzuleitung 123' hinter dem Druckminderventil 124 erreicht. Die Zylinderräume auf der Bodenseite der Kolbenantriebe 45.2 ... 45.4 und die gemeinsame Versorgungsleitung 123 wirken als Puffervolumen für den Kolbenantrieb 45.1, so daß auch dadurch der Kraftanstieg im Kolbenantrieb 45.1 am Anfang verringert ist. Dadurch erreicht die Drehbeschleunigung des Haltearmes 41 an der Führungsstange 35.1 in jedem Fall nur solche Werte, daß die Schwenkvorrichtung 51 die Schwenkbewegung am Ende des Schwenkweges ohne Überlastung der Teile und ohne übermäßige Schwingungen auffangen kann.

## Ansprüche

1.  Werkzeugmaschine für die spanabhebende Bearbeitung von Werkstücken mit verschiedenen Werkzeugen,
    - mit einem Spindelgehäuse (16), das mittels einer Führung (13) gegenüber dem Maschinengestell und dessen Werkstücktisch in der Höhe verfahrbar ist,
    - mit einer Hauptspindel (17), die in dem Spindelgehäuse (16) in Richtung ihrer Längsachse unverschieblich drehbar gelagert ist, die an dem dem Werkstücktisch zugekehrten Ende einen Aufnahmekegel (19) für Werkzeughalter aufweist, in welchen einzelne Werkzeughalter (21) einsetzbar sind, und die eine Spannvorrichtung (22) aufweist, mittels der der in die Hauptspindel eingesetzte Werkeughalter festspannbar ist, und
    - mit mehreren am Spindelgehäuse um dieses herum angeordneten Werkzeugwechselvorrichtungen (31), an denen mittels Halteelementen je eines der Werkzeughalter (21) drehbar anbringbar ist und mit ihnen in eine Ruhestellung oder Magazinstellung außerhalb der Hauptspindel und in eine Einspannstellung in der Hauptspindel bewegbar ist, **gekennzeichnet** durch die Merkmale:
    - jede Werkzeugwechselvorrichtung (31) weist eine am Spindelgehäuse (16) oder an einem mit ihm verbundenen Teil (14) angeordnete Längsführung (33, 34) auf, deren Führungsbahn parallel zur Längsachse (18) der Hauptspindel (17) ausgerichtet ist,

- in jeder Längsführung (33, 34) ist je eine Führungsstange (35) längsverschiebbar geführt,
- jede Führungsstange (35) ist mit einem eigenen Kraftantrieb (45) gekoppelt, mittels dessen sie zwischen einer zurückgezogenen Stellung und einer ausgefahrenen Stellung auf und ab bewegbar ist,
- an dem dem Werkstücktisch zugekehrten Ende einer jeden Führungsstange (35) ist ein Haltearm (41) angeordnet, der um die Längsachse (44) der Führungsstange (35) schwenkbar geführt ist,
- am Haltearm (41) sind die Halteelemente (42) für einen Werkzeughalter (21) in einem Abstand von der Längsachse (44) der Führungsstange (35) angeordnet, der zumindest annähernd gleich dem Abstand der Längsachse (44) der Führungstange (35) von der Längsachse (18) der Hauptspindel (17) ist,
- für jeden Haltearm (41) ist eine Schwenkvorrichtung (51) vorhanden, die mittels eines Kraftantriebes (45) betätigbar ist.

2. Werkzeugmaschine nach Anspruch 1, **gekennzeichnet** durch das Merkmal:
- die Schwenkvorrichtung (51) weist eine in axialer und zugleich in Umfangsrichtung verlaufende Steuerkurve (55), ein damit zusammenwirkendes Nachführglied (56) und einen Kraftantrieb (45) für eine axiale Relativbewegung dieser beiden Teile (55, 56) auf, wobei entweder die Steuerkurve (55) oder das Nachführglied (56) mit der Führungsstange (36) und das Nachführglied (56) bzw. die Steuerkurve (55) mittelbar oder unmittelbar mit dem Maschinengestell (14) oder mit dem Spindelgehäuse (16) drehfest verbunden ist.

3. Werkzeugmaschine nach Anspruch 2, **gekennzeichnet** durch die Merkmale:
- die Führungsslange (35) ist in der Länge zweigeteilt, wobei ihre beiden Teile (36, 37) vorzugsweise miteinander fluchten und bevorzugt der eine Teil (37) an seinem dem anderen Teil (36) zugekehrten Ende als Führungshülse (52) für den anderen Teil (36) ausgebildet ist,
- von der Schwenkvorrichtung (51) ist die Steuerkurve an dem einen Teil (37) der Führungsstange (35), vorzugsweise an dem als Führungshülse (52) ausgebildeten Längenabschnitt, angeordnet und bevorzugt als radial durchgehender Steuerschlitz (55) ausgebildet,

- von der Schwenkvorrichtung (51) ist das Nachführglied an dem anderen Teil (36) der Führungsstange (35) angeordnet, und zwar vorzugsweise an demjenigen Längenabschnitt, der sich in den als Führungshülse (52) ausgebildeten Längenabschnitt des anderen Teils (37) hineinerstreckt, und bevorzugt als radial ausgerichteter Nachführstift (56) ausgebildet ist, der auf den Steuerschlitz (55) abgestimmt ist.

4. Werkzeugmaschine nach Anspruch 3, **gekennzeichnet** durch die Merkmale:
- in der Bewegungsbahn desjenigen Teils (36) der Führungsstange (35), an dem der Haltearm (41) für den Werkzeughalter (21) angeordnet ist, ist ein erster Anschlag (49, 57) an derjenigen Stelle seiner relativen Bewegungsbahn angeordnet, die der Endstellung dieses Teils (36) der Führungsstange (35) gegenüber dem Spindelgehäuse (16) entspricht,
- der erste Anschlag (49, 57) ist vorzugsweise mit einem Axiallager ausgerüstet oder als Axiallager ausgebildet,
- es ist ein Federelement, vorzugsweise in Form wenigstens einer metallenen Schraubendruckfeder (54), vorhanden, das auf die beiden Teile (36, 37) der Führungsstange (35) eine sie in axialer Richtung auseinanderbewegende Kraft ausübt,
- es ist ein zwischen den beiden Teilen (36, 37) der Führungsstange (35) wirkender zweiter Anschlag vorhanden, der die relative Ausfahrbewegung der beiden Teile (36, 37) begrenzt und der vorzugsweise durch den Steuerschlitz (55) und das Nachführglied (56) gebildet wird.

5. Werkzeugmaschine nach Anspruch 3 oder 4, **gekennzeichnet** durch die Merkmale:
- sämtliche Werkzeugwechselvorrichtungen (31) sind an einem gemeinsamen Träger (61) angeordnet, der am Spindelgehäuse (14, 16) mittels einer Längsführung (39) verschiebbar geführt ist, deren Bewegungsbahn parallel zur Längsachse (18) der Hauptspindel (17) ausgerichtet ist,
- es ist wenigstens ein Federelement (62) vorhanden, das auf den Träger (61) eine Kraft in einer Richtung ausübt, die von dem Aufnahmekegel (19) der Hauptspindel (17) abgekehrt ist,

- in der relativen Bewegungsbahn des Trägers (61) ist ein mit dem Maschinengestell (14) fest verbundener Anschlag (65) angeordnet, der in Bezug auf die vom Vorschubantrieb des Spindelgehäuses (16) bewirkte höchste Höhenstellung des Spindelgehäuses (16) in die Bewegungsbahn des Trägers (61) um ein Maß hineinragt, das mindestens gleich dem Be- und Entladehub der Werkzeughalter (21) in Bezug auf die Hauptspindel (17) ist.

6. Werkzeugmaschine nach einem der Ansprüche 1 bis 5, **gekennzeichnet** durch die Merkmale:
- am Haltearm (81) ist für die Aufnahme eines Werkzeughalters (85) ein Durchgangsloch (85) vorhanden,
- um das Durchgangsloch (83) herum ist wenigstens eine Auflagefläche (84) in Form einer in sich geschlossenen umlaufenden Fläche oder in Form einzelner am Umfang verteilter Flächenabschnitte angeordnet,
- die Werkzeughalter (85) weisen wenigstens eine Auflagefläche (86), gegebenenfalls mehrere Auflageflächen, auf, die auf die Auflagefläche (84) des Haltearmes (81) abgestimmt ist.

7. Werkzeugmaschine nach Anspruch 6, **gekennzeichnet** durch die Merkmale:
- am Werkzeughalter (85) ist die Auflagefläche (86) als Kegelstumpffläche ausgebildet, deren Mantellinie gegenüber der Längsachse eine Neigung hat, die größer als der Reibungswinkel zwischen dieser Auflagefläche (86) und der Auflagefläche (84) am Haltearm (81) ist,
- am Haltearm (81) ist die Auflagefläche (84) ebenfalls als Kegelstumpffläche ausgebildet, die auf die Kegelstumpffläche (86) am Werkzeughalter (85) abgestimmt ist und die vorzugsweise die Innenfläche eines Halteringes (82) bildet, der aus Kunststoff, insbesondere aus einem abriebfesten Kunststoff, hergestellt ist und der in eine darauf abgestimmte Ausnehmung (80) des Haltearms (81) eingesetzt ist.

8. Werkzeugmaschine nach Anspruch 6 oder 7, die zwischen der Hauptspindel und den darin eingesetzten Werkzeughaltern eine Mitnehmervorrichtung aufweist, die insbesondere als axiale Nut- und Federverbindung ausgebildet ist, **gekennzeichnet** durch die Merkmale:
- zwischen dem Haltearm (81) und dem Werkzeughalter (85) ist eine Positioniervorrichtung (88) angeordnet, die vorzugsweise als axiale Nut- und Federverbindung ausgebildet ist und deren Teile so zueinander ausgerichtet sind, daß in der Bereitschaftsstellung des Haltearmes (81) in Bezug auf die Hauptspindel (75) die Teile (78, 87) der Mitnehmervorrichtung (76) in axialer Richtung miteinander fluchten,
- am Haltearm (81) ist der Teil der Positioniervorrichtung (88) vorzugsweise als Feder (92) ausgebildet,
- am Werkzeughalter (81) ist der Teil der Positioniervorrichtung (88) vorzugsweise als Nut (89) ausgebildet, die bevorzugt mit der Nut (87) der Mitnehmervorrichtung (76) fluchtet, insbesondere in diese übergeht.

9. Werkzeugmaschine nach einem der Ansprüche 1 bis 5, **gekennzeichnet** durch die Merkmale:
- am Haltearm (97) sind die Halteelemente (98) an zwei Schwenkarmen (101; 102) angeordnet, die am Haltearm (97), vorzugsweise in einer gemeinsamen Schwenkebene, mittels je eines Schwenklagers (103; 104) schwenkbar gelagert sind, dessen Schwenkachse zumindest annähernd parallel zur Längsachse der Hauptspindel (105) ausgerichtet ist,
- es ist eine Betätigungsvorrichtung (107) vorhanden, mittels der die beiden Schwenkarme (101; 102), vorzugsweise gegenläufig synchron, relativ zueinander verschwenkbar sind.

10. Werkzeugmaschine nach Anspruch 9, **gekennzeichnet** durch die Merkmale:
- die Betätigungsvorrichtung (107) weist eine Schließfeder (109) auf, die die Schwenkarme (101; 102) in ihre Schließstellung drückt,
- die Betätigungsvorrichtung (107) weist ein Kniehebelgestänge (108) auf; von dessen beiden Hebelstangen (111; 112) je eine, vorzugsweise mittels eines Kugelgelenkes (113; 114), an einem der Schwenkarme (101; 102) angelenkt ist und dessen Kniegelenk (115) in der angewinkelten Stellung der beiden Hebelstangen (111; 112) vom Haltearm (97) aus dem Spindelgehäuse (106) zugekehrt ist,

- in der axialen Bewegungsbahn des Kniegelenkes (115) ist am Spindelgehäuse (106) ein Anschlag (118) so angeordnet, daß beim Einsetzen eines Werkzeughalters (99) in die Hauptspindel (105) bei der Annäherung des Haltearmes (97) an seine axiale Endstellung, das Kniehebelgestänge (108) von der Shließstellung in die Freigabestellung bewegbar ist.

11. Werkzeugmaschine nach den Ansprüchen 1 bis 5,
bei der der Kraftantrieb für jede Führungsstange als doppeltwirkender pneumatischer Kolbenantrieb ausgebildet ist, und bei der jeder pneumatische Kolbenantrieb über ein Umsteuerventil an eine gemeinsame Versorgungsleitung für Druckluft in der Weise angeschlossen ist, daß in der einen Schaltstellung (Ruhestellung) des Steuerventils die Kolbenunterseite mit der gemeinsamen Versorgungsleitung verbunden ist, durch die die zugehörige Führungsstange in die zurückgezogene Stellung anhebbar ist, und die Kolbenoberseite in die Umgebung entlüftet ist, und daß in der anderen Schaltstellung (Arbeitsstellung) des Steuerventils die Kolbenunterseite entlüftet ist und die Kolbenoberseite mit der gemeinsamen Versorgungsleitung verbunden ist,
**gekennzeichnet** durch die Merkmale:
- die pneumatischen Kolbenantriebe (45) der Führungsstangen (35) sind an eine gemeinsame Versorgungsleitung (123) angeschlossen, deren Überdruck auf einen bestimmten Druckwert eingestellt oder einstellbar ist, der so bemessen ist, daß in dem Kolbenantrieb (45.1), der über das zugehörige Umsteuerventil (120) auf Ausfahren seiner Führungsstange (35.1) geschaltet ist, die von diesem Druckwert hervorgerufene Druckkraft des Kolbenantriebes (45.1) nur um einen bestimmten Wert größer ist als die Gegenkraft des Federelementes (54), das zwischen den beiden Stangenteilen (36; 37) dieser Führungsstange (35.1) wirkt, wenn der Stangenteil (36) mit dem Haltearm (41) an dem ersten Anschlag (49) anliegt und die beiden Stangenteile (36; 37) ihre größte relative Annäherung erreicht haben,
- in die gemeinsame Versorgungsleitung (123) ist ein Entlüftungsventil (124) eingeschaltet, das in der einen Schaltstellung (Ruhestellung) die gemeinsame Versorgungsleitung (123) mit der Druckluftquelle (126) verbindet, und das in der anderen Schaltstellung (Arbeitsstellung) die gemeinsame Versorgungsleitung (123) in die Umgebung entlüftet,
- die Programmsteuerung für den Arbeitsablauf der Werkzeugmaschine ist mit einem Zeitschaltglied versehen, das eine gewisse Zeitspanne vor dem Zeitpunkt ($t_o$), in dem das Umsteuerventil (120) des Kolbenantriebes (45.1) mit der in der ausgefahrenen Stellung befindlichen Führungsstange (35.1) von der Arbeitssellung (120.1) in die Ruhestellung (120.0) umgeschaltet wird, das Entlüftungsventil (127) von der Ruhestellung in die Arbeitsstellung umschaltet, und das zumindest annähernd in diesem Zeitpunkt ($t_o$) das Entlüftungsventil (127) wieder von der Arbeitsstellung in die Ruhestellung umschaltet.

12. Werkzeugmaschine nach Anspruch 11,
**gekennzeichnet** durch das Merkmal:
- in die Verbindungsleitung (125; 123') zwischen der Druckluftquelle (126) und dem Entlüftungsventil (127) ist ein Druckminderventil (124) eingeschaltet, das bevorzugt einstellbar ist.

13. Werkzeugmaschine nach Anspruch 11 und 12,
**gekennzeichnet** durch das Merkmal:
- das Zeitschaltglied in der Programmsteuerung ist einstellbar ausgebildet.

## Claims

1. A machine tool for the cutting processing of workpieces using different tools comprising:
- a spindle housing (16), which by means of a guide (13) is vertically displaceable relative to the machine frame and the workpiece table thereof.
- a main spindle (17), which is rotatably mounted in the spindle housing (18) so as to be non-displaceable in the direction of its longitudinal axis and which at the end facing the workpiece table comprises a receiving cane (19) for tool holders, into which receiving cone individual tool holders (21) can be inserted, and the main spindle (17) comprising a clamping device (22), by means of which the tool holder inserted in the main spindle can be secured, and
- a plurality of tool changing devices (31) arranged on the spindle housing surrounding the latter, to which tool changing devices one of the tool holders (21) can be attached in each case by means of securing elements and can be moved with the tool changing devices into an inoperative position or magazine position outside the main spindle and into a clamping position in the main spindle, characterised by the following features:

- each tool changing device (31) comprises a longitudinal guide (33,34) arranged on the spindle housing (16) or on a part (14) connected therewith, the guide path of said longitudinal guide (33,34) being parallel to the longitudinal axis (18) of the main spindle (17),
- a guide rod (35) is guided in each longitudinal guide (33, 34) so as to be longitudinally displaceable,
- each guide rod (35) is coupled with its own power drive (45), by means of which the guide rod can be moved up and down between a retracted position and an extended position,
- arranged at the end facing the workpiece table of each guide rod (35) is a support arm (41), which is pivotably guided about the longitudinal axis (44) of the guide rod (35),
- the securing elements (42) for a tool holder (21) are arranged on the support arm (41) at a distance from the longitudinal axis (44) of the guide rod (35), said distance being at least approximately dual to the distance between the longitudinal axis (44) of the guide rod (35) and the longitudinal axis (18) of the main spindle (17),
- a pivoting device (51), which is actuated by means of a power drive (45), is provided for each support arm (41).

2. A machine tool according to claim 1, characterised in that the pivoting device (51) comprises a cam (55) extending simultaneously in the axial and circumferential directions, a follower (56) cooperating with said cam (55) and a power drive (45) for a relative axial movement of these two parts (55, 56), either the cam (55) or the follower (56) being directly or indirectly rotationally rigidly connected with the guide rod (36) and the follower (56) or the cam (55) being directly or indirectly rotationally rigidly connected with the machine frame (14) or with the spindle housing (16).

3. A machine tool according to claim 2, characterised by the following features:

- the guide rod (35) is subdivided in its length, its two parts (36, 37) preferably being flush with one another and one part (37) preferably being designed at its end facing the second part (36) as a guide sleeve (52) for the second part (36),
- the cam of the pivoting device (51) is arranged on one part (37) of the guide rod (35), preferably on the longitudinal section designed as a guide sleeve (52), and is preferably designed as a continuous radial control slot (55),
- the follower of the pivoting device (51) is arranged on the other part (36) of the guide rod (35), preferably on the longitudinal section which extends into the longitudinal section of the other part designed as a guide sleeve (52), and is preferably designed as a radial follower pin (56), which is adapted to the control slot (55).

4. A machine tool according to claim 3, characterised by the following features:

- in the path of movement of that part (36) of the guide rod (35) on which the support arm (41) for the tool holder (21) is arranged, a first abutment (49, 57) is arranged at that point in the relative path of movement which corresponds to the end position of said part (36) of the guide rod (35) relative to the spindle housing (16),
- the first abutment (49, 57) is preferably provided with an axial bearing or is designed as an axial bearing,
- a spring element is provided, preferably in the form of at least one metal helical compression spring (54), which exerts a force upon the two parts (36, 37) of the guide rod (35), which force moves the two parts away from one another in the axial direction.
- a second abutment is provided, which acts between the two parts (36, 37) of the guide rod (35), limits the relative extending movement of the two parts (36, 37) and is preferably formed by the cam slot (55) and the follower (56).

5. A machine tool according to claim 3 or 4, characterised by the following features:

- all the tool changing devices (31) are arranged on a common support (61), which is displaceably guided on the spindle housing (14, 16) by means of a longitudinal guide (39), whose path of movement is parallel to the longitudinal axis (18) of the main spindle (17),
- at least one spring element (62) is provided, which exerts a force upon the support (61) in a direction pointing away from the receiving cone (19) of the main spindle (17),

- arranged in the relative path of movement of the support (61) is an abutment (65), which is securely connected with the machine frame (14) and which in the highest vertical position of the spindle housing (16) effected by the advance drive of the spindle housing (16), projects into the path of movement of the support (61) by a distance which is at least equal to the loading and unloading stroke of the tool holder (21) relative to the main spindle (17).

6. A machine tool according to one of claims 1 to 5, characterised by the following features:
    - a through hole (83) is provided in the support arm (81) for receiving a tool holder (85),
    - surrounding the through hole (83) is at least one bearing surface (84) in the form of a closed circumferential surface or in the form of individual surface sections distributed around the circumference,
    - the tool holders (85) comprise at least one bearing surface (86), optionally a plurality of bearing surfaces, to which the bearing surface (84) of the support arm (81) is adapted.

7. A machine tool according to claim 6, characterised by the following features:
    - the bearing surface (86) on the tool holder (85) is designed as a frusto-conical surface, whose generatrix has an angle of inclination relative to the longitudinal axis which is greater than the angle of friction between said bearing surface (86) and the bearing surface (84) on the support arm (81),
    - the bearing surface (84) on the support arm (81) is also designed as a frusto-conical surface, which matches the frusto-conical surface (86) on the tool holder (85) and preferably forms the inner surface of a support ring (82), which is made of plastics material, more particularly a wear-resistant plastics material, and which is inserted in a correspondingly shaped recess (80) in the support arm (81).

8. A machine tool according to claim 6 or 7, which between the main spindle and the tool holders inserted therein comprises a carrier device, which is more particularly designed as an axial groove and spring connection, characterised by the following features:
    - arranged between the support arm (81) and the tool holder (85) is a positioning device (88), which is preferably designed as an axial groove and spring connection and whose parts are aligned relative to one another in such a manner that in the operative position of the support arm (81) relative to the main spindle (75), the parts (78, 87) of the carrier device (76) are flush with one another in the axial direction,
    - the part of the positioning device (88) on the support arm (81) is preferably designed as a spring (92),
    - the part of the positioning device (88) on the tool holder (85) is preferably designed as a groove (89), which is preferably flush with the groove (87) in the carrier device (76), and more particularly extends into said groove (87).

9. A machine tool according to one of claims 1 to 5, characterised by the following features:
    - on the support arm (97), the securing elements (98) are arranged on two pivoting arms (101; 102), which are pivotably mounted on the support arm (97), preferably in a common pivoting plane, by means of a pivot bearing (103; 104) in each case, whose pivoting axis is at least approximately parallel to the longitudinal axis of the main spindle (105),
    - an actuating device (107) is provided, by means of which the two pivoting arms (101; 102) can be pivoted relative to one another, preferably synchronously in opposite directions.

10. A machine tool according to claim 9, characterised by the following features:
    - the actuating device (107) comprises a closing spring (109), which forces the pivoting arms (101; 102) into their closed position,
    - the actuating device (107) comprises a toggle lever system (108) with two lever rods (111; 112), each of which is hingedly connected, preferably via a ball-and-socket joint (113; 114), to one of the pivoting arms (101; 102) and the toggle joint (115) of the toggle lever system (108) facing the spindle housing (106) when the two lever rods (111; 112) are in the position angled away from the support arm (97),

- in the axial path of movement of the toggle joint (115) an abutment (118) is arranged on the spindle housing (106) in such a manner that, when a tool holder (99) is inserted into the main spindle (105) as the support arm (97) approaches its axial end position, the toggle lever system (108) can be moved from the closed position into the releasing position.

11. A machine tool according to claims 1 to 5, wherein the power drive for each guide rod is designed as a double-action pneumatic piston drive, and each pneumatic piston drive is connected via a reversing valve to a common supply line for compressed air in such a manner that, in one switching position (inoperative position) of the control valve, the piston underside is connected with the common supply line, by means of which the associated guide rod can be raised into the retracted position, and the piston upper side is evacuated into the surrounding air, and in the second switching position (operative position) of the control valve, the piston underside is evacuated and the piston upper side is connected with the common supply line, characterised by the following features:
    - the pneumatic piston drives (45) of the guide rods (35) are connected to a common supply line (123), whose overpressure is adjusted or adjustable to a specific pressure value, which is determined in such a manner that, in the piston drive (45.1), which is switched via the associated reversing valve (120) to extension of its guide rod (35.1), the pressure force of the piston drive (45.1) generated by this pressure value only exceeds by a specific value the counter force of the spring element (54) which acts between the two rod parts (36; 37) of said guide rod (35.1) when the rod part (36) with the support arm (41) rests against the first abutment (49) and the two rod parts (36; 37) have reached their greatest relative proximity,
    - connected in the common supply line (123) is an air bleed valve (124), which in one switching position (inoperative position) connects the common supply line (123) with the compressed air source (126), and in the other switching position (operative position) evacuates the common supply line (123) into the surrounding air,
    - the program control for the operating sequence of the machine tool is provided with a time switch element, which switches the air bleed valve (127) from the inoperative position into the operative position a certain length of time prior to the point in time ($t_o$), when the reversing valve (120) of the piston drive (45.1) with the guide rod (35.1) in the extended position switches from the operative position (120.1) into the inoperative position (120.0), and at least approximately at this point in time ($t_o$), the air relief valve (127) switches again from the operative position into the inoperative position.

12. A machine tool according to claim 11, characterised in that a pressure reducing valve (124), which is preferably adjustable, is inserted in the connecting line (125: 123') between the compressed air source (126) and the air relief valve (127).

13. A machine tool according to claims 11 and 12, characterised in that the time switch element in the program control is adjustable.

**Revendications**

1. Machine-outil pour un usinage avec enlèvement de copeaux, de pièces à l'aide de différents outils, comprenant :
    - un carter de broche (16) mobile en hauteur par l'intermédiaire d'un moyen de guidage (13) par rapport au bâti de la machine et à son plateau porte-pièces,
    - comportant une broche principale (17) montée à rotation dans le boîtier de broche (16), bloqué en direction de son axe longitudinal, broche dont l'extrémité tournée vers le plateau porte-pièces comporte un cône de réception (19) pour un support d'outil, cône qui peut recevoir un support d'outil (21), et muni d'un dispositif de serrage (22) par lequel on peut serrer le porte-outil dans la broche principale et
    - plusieurs dispositifs de changement d'outil (31) prévus sur le boîtier de la broche, autour de celui-ci, et qui reçoivent par l'intermédiaire d'éléments de fixation, chaque fois un support d'outil (21) monté rotatif, pour être mis soit en position de repos ou position de blocage en dehors de la broche principale et une position de mise en oeuvre dans la broche principale, machine-outil caractérisée par les caractéristiques suivantes :

- chaque dispositif de changement d'outil (31) comporte un moyen de guidage longitudinal (33, 34) prévu sur le boîtier de la broche (16) ou une partie (14) reliée à ce boîtier, dont le chemin de guidage est parallèle à l'axe longitudinal (18) de la broche principale (17),
- chaque moyen de guidage longitudinal (33, 34) reçoit une tige de guidage (35) coulissante longitudinalement,
- chaque tige de guidage (35) est couplée à un moyen d'entraînement (45), distinct par lequel cette tige de guidage peut être mise dans une position en retrait ou une position déployée, par mouvements ascendant et descendant,
- l'extrémité de chaque tige de guidage (35) tournée vers le plateau porte-pièces comporte un bras de fixation (41) qui est guidé de manière pivotante autour de l'axe longitudinal (44) de la tige de guidage (35),
- les éléments de fixation (42) pour un support d'outil (21) sont prévus sur le bras de fixation (41) à une certaine distance de l'axe longitudinal (44) de la tige de guidage (35), distance qui est au moins approximativement égale à la distance entre l'axe longitudinal (44) de la tige de guidage (35) et l'axe longitudinal (18) de la broche principale (17),
- chaque bras de fixation (41) comporte un dispositif de pivotement qui peut être actionné par un moyen d'entraînement (45).

2. Machine-outil selon la revendication 1, caractérisée en ce que :
- le dispositif de pivotement (51) comporte une courbe de commande (55) dirigée axialement et en même temps de manière périphérique, avec laquelle coopère un organe-suiveur (56) et un moyen d'entraînement (45) pour un mouvement relatif axial de ces deux parties (55, 56), et soit la courbe de commande (55), soit l'organe-suiveur (56) sont reliés à la tige de guidage (36) et en ce que l'organe-suiveur (56) et la courbe de commande (55) sont reliés directement ou indirectement au bâti (14) de la machine ou au boîtier (16) de la broche, de manière solidaire en rotation.

3. Machine-outil selon la revendication 2, caractérisée en ce que :
- la tige de guidage (35) est subdivisée en longueur et ces deux parties (36, 37) sont de préférence alignées et notamment une partie (37) est réalisée comme douille de guidage (52) pour l'autre partie (36) à son extrémité tournée vers cette autre partie (36),
- la courbe de commande du dispositif de pivotement (51) sur l'une des parties (37) de la tige de guidage (35) est réalisée de préférence sur son segment de longueur constituant la douille de guidage (52) avec de préférence une fente de commande (55) traversant radialement,
- l'organe-suiveur du dispositif de pivotement (51) est prévu sur l'autre partie (36) de la tige de guidage (35) et cela de préférence sur le segment de longueur qui pénètre dans le segment de longueur en forme de douille de guidage (52) de l'autre partie (37) et est de préférence réalisé sous la forme de tige de guidage (56) dirigée axialement, correspondant à la fente de commande (55).

4. Machine-outil selon la revendication 3, caractérisée en ce que :
- dans la trajectoire de la partie (36) de la tige de guidage (35) munie du bras de fixation (41) du porte-outil (21), il est prévu une première butée (49, 57) à l'emplacement de sa trajectoire relative qui correspond à la position de fin de course de cette partie (segment) (36) de la tige de guidage (35) par rapport au boîtier (16) de la broche,
- la première butée (49, 57) est munie de préférence d'un palier axial ou est de préférence réalisée sous la forme d'un palier axial,
- un élément élastique de préférence sous la forme d'au moins un ressort hélicoïdal de compression (54), métallique qui exerce une force d'écartement dirigée axialement sur les deux segments (36, 37) de la tige de guidage (35),
- une seconde butée agissant entre les deux segments (36, 37) de la tige de guidage (35) limite le mouvement de débattement relatif des deux segments (36, 37) et est de préférence formée par la fente de commande (55) et l'organe-suiveur (56).

5. Machine-outil selon la revendication 3 ou 4, caractérisée en ce que :
- tous les dispositifs de changement d'outil (31) sont prévus sur un support commun (61) guidé en coulissement par un moyen de guidage longitudinal (39) sur le boîtier de broche (14, 16), et dont la trajectoire est parallèle à l'axe longitudinal (18) de la broche principale (17),

- au moins un élément élastique (62) est prévu pour exercer sur le support (61) une force dirigée dans la direction opposée à celle du cône de réception (19) de la broche principale (17),
- une butée (65) solidaire du bâti (14) de la machine est prévue dans la trajectoire relative du support (61), cette butée venant en saillie dans la trajectoire du support (61) à une distance rapportée à la position de réglage la plus haute du boîtier de broche (16) par rapport à l'avancée du boîtier de broche (16), distance qui est au moins égale à la course de chargement et de déchargement du porte-outil (21) par rapport à la broche principale (17).

6. Machine-outil selon l'une des revendications 1 à 5, caractérisée en ce que :
   - un orifice traversant (83) est prévu sur le bras de fixation (81) pour recevoir un porte-outil (85),
   - autour de l'alésage (83), il est prévu au moins une surface d'appui (84) sous la forme d'une surface périphérique fermée ou sous la forme de segments de surface répartis à la périphérie,
   - les porte-outils (85) comporte au moins une surface d'appui (86), le cas échéant plusieurs surfaces, qui correspondent à la surface d'appui (84) du bras de fixation (81).

7. Machine-outil selon la revendication 6, caractérisée en ce que :
   - le porte-outil (85) est muni d'une surface d'appui (86) en forme de tronc de cône dont la génératrice est inclinée par rapport à l'axe longitudinal suivant un angle supérieur à l'angle de friction entre cette surface (86) et la surface d'appui (84) du bras de fixation (81),
   - la surface d'appui (84) du bras de fixation (81) est également en forme de surface tronconique qui correspond à la surface tronconique (86) du porte-outil (85) et forme de préférence la surface intérieure d'un anneau de fixation (82) en matière synthétique notamment en matière synthétique résistant au frottement, et qui est prévu dans une cavité (80) correspondante du bras de fixation (81).

8. Machine-outil selon la revendication 6 ou 7 qui comporte un dispositif d'entraînement prévu entre la broche principale et le porte-outil placé dans celle-ci, dispositif d'entraînement ayant en particulier une liaison par rainure et clavettes, axiale, machine caractérisée en ce que :
   - un dispositif de positionnement (88) est prévu entre le bras de fixation (81) et le porte-outil (85), dispositif de positionnement de préférence réalisé sous la forme d'un moyen de liaison par rainure et clavette axiale et dont les parties sont alignées pour que dans la position préparatoire du bras de fixation (81) par rapport à la broche principale (75), les parties (78, 87) du dispositif d'entraînement (76) soient alignées dans la direction axiale,
   - la partie du dispositif de positionnement (88) du bras de fixation (81) est réalisée de préférence sous la forme d'une clavette (92),
   - la partie du dispositif de positionnement (88) du porte-outil (81) est réalisée de préférence sous forme de rainure (89 qui est de préférence alignée sur la rainure (87) du dispositif d'entraînement (76) et notamment se transforme dans cette rainure.

9. Machine-outil selon l'une des revendications 1 à 5, caractérisée en ce que :
   - les éléments de fixation (98) sont prévus sur deux bras pivotants (101, 102) du bras de fixation (97), bras pivotants qui sont montés pivotants sur le bras de fixation (97) de préférence dans un plan de pivotement commun, par l'intermédiaire de chaque fois un palier de pivotement (103, 104) dont les axes de pivotement sont au moins approximativement parallèles à l'axe longitudinal de la broche principale (105),
   - un dispositif de manoeuvre (107) permet de pivoter les deux bras pivotants (101, 102) de préférence de manière synchrone, opposés l'un par rapport à l'autre.

10. Machine-outil selon la revendication 9, caractérisée en ce que :
    - le dispositif de manoeuvre (107) comporte un ressort de fermeture (109) qui pousse les bras pivotants (101, 102) vers leur position de fermeture,
    - le dispositif de manoeuvre (107) comporte une tringlerie à genouillère (108) dont les deux bras de levier (111, 112) sont articulés respectivement, de préférence par l'intermédiaire d'une articulation à rotule (113, 114) sur l'un des bras pivotants (101, 102) et dans la position pliée des deux bras de levier (111, 112) l'articulation de genouillère (115) est dirigée vers le boitier de broche (106) à partir du bras de fixation (97),

- une butée (118) est prévue sur le boîtier (106) dans la trajectoire axiale de l'articulation à genouillère (115) pour que lors de la mise en place d'un porte-outil (99) dans la broche principale (105), lorsque le bras de fixation (97) se rapproche de sa position axiale de fin de course, la tringlerie à genouillère (108) passe de la position de fermeture à la position de libération.

11. Machine-outil selon les revendications 1 à 5 dans laquelle le moyen d'entraînement des deux tiges de guidage est constitué par un vérin pneumatique à double effet et pour chaque vérin pneumatique, une soupape d'inversion est reliée à une conduite d'alimentation commune en air comprimé pour que dans une position de commutation (position de repos) de la soupape de commande, la face inférieure du piston du vérin soit reliée à la conduite d'alimentation commune qui peut soulever la tige de guidage correspondante dans sa position en retrait et évacue la face supérieure du piston, et en ce que dans l'autre position de commutation (position utile) de la soupape de commande, la face inférieure du piston est évacuée et la face supérieure du piston est reliée à la conduite d'alimentation commune, machine-outil caractérisée en ce que :

- les vérins pneumatiques (45) des tiges de guidage (35) sont reliés à une conduite d'alimentation commun (123) dont la surpression est réglée à un niveau déterminé ou se règle à un niveau déterminé, choisi pour que dans le vérin (45.1) dont la tige de guidage (35.1) est déployée par la soupape d'inversion (120) correspondante, la force de ce vérin (45.1) engendrée par ces pressions n'est supérieure que d'une valeur déterminée à la force antagoniste de l'élément à ressort (54) agissant entre les deux segments de tige (36, 37) de cette tige de guidage (35.1) lorsque le segment (36) s'applique avec le bras de fixation (41) contre la première butée (49) et que les deux segments (36, 37) se trouvent les plus rapprochés,

- une soupape de mise à l'atmosphère (124) est prévue dans la conduite d'alimentation commune (123) pour que dans une position de commutation (position de repos) la conduite d'alimentation commune (123) soit reliée à la source d'air comprimé (126) et pour que dans l'autre position de commutation (position utile), la conduite d'alimentation commune (123) débouche à l'atmosphère,

- la commande programmée du cycle de travail de la machine-outil comporte un organe de temporisation qui est inversé à un certain instant en amont de l'instant ($t_0$) lorsque la soupape d'inversion (120) du vérin (45.1), la tige de guidage (35.1) étant en position déployée, commute de sa position de travail (120.1) à la position de repos (120.0), en inversant la soupape d'évacuation (127) de sa position de repos à sa position utile et en ce qu'au moins aux environs de cet instant ($t_0$), la soupape d'évacuation (127) commute de nouveau de sa position utile à sa position de repos.

12. Machine-outil selon la revendication 11, caractérisée en ce que :
- la conduite de liaison (125, 123') reliant la source d'air comprimé (126) et la soupape d'évacuation (127) comporte une soupape de réduction de pression (124) qui est de préférence réglable.

13. Machine-outil selon la revendication 11 ou 12, caractérisée en ce que l'organe de temporisation de la commande programmée est réglable.

Fig.1

Fig. 2

Fig.3

Fig.4

Fig.6

Fig.5

105

106

35

Fig. 8

107

118

108

99

97

Fig. 7

35

106

118

108

99

97

Fig. 9